(19) Europäisches Patentamt
European Patent Office
Office européen des brevets

(11) Publication number: 0 111 965
B1

(12) # EUROPEAN PATENT SPECIFICATION

(45) Date of publication of patent specification: 26.07.89

(51) Int. Cl.[4]: C 11 D 3/00, C 11 D 1/40, C 11 D 3/37, C 11 D 3/30

(21) Application number: 83201751.1

(22) Date of filing: 13.12.83

(54) **Detergent compositions containing cationic compounds having clay soil removal/anti-redeposition properties.**

(30) Priority: 23.12.82 US 452648
23.12.82 US 452649
23.12.82 US 452655
22.11.83 US 553550
22.11.83 US 553551

(43) Date of publication of application:
27.06.84 Bulletin 84/26

(45) Publication of the grant of the patent:
26.07.89 Bulletin 89/30

(84) Designated Contracting States:
AT BE CH DE FR IT LI NL SE

(56) References cited:
EP-A-0 042 187
DE-A-2 226 871
FR-A-2 435 966
US-A-3 936 538
US-A-4 171 278

(73) Proprietor: THE PROCTER & GAMBLE COMPANY
301 East Sixth Street
Cincinnati Ohio 45202 (US)

(72) Inventor: Oh, Young Sik
5461 Sir Lancelot Lane
Fairfield Ohio 45014 (US)
Inventor: Rubingh, Don Nelton
8224 Sheet Road
Cincinnati Ohio 45239 (US)
Inventor: Gosselink, Eugene Paul
3754 Susanna Drive
Cincinnati Ohio 45239 (US)

(74) Representative: Ernst, Hubert et al
PROCTER & GAMBLE EUROPEAN TECHNICAL CENTER Temselaan 100
B-1820 Strombeek-Bever (BE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 111 965 B1

## Description

Technical Field

The present application relates to cationic compounds having clay-soil removal/anti-redeposition properties when used in detergent compositions.

A particularly important property of a detergent composition is its ability to remove particulate type soils from a variety of fabrics during laundering. Perhaps the most important particulate soils are the clay-type soils. Clay soil particles generally comprise negatively charged layers of aluminosilicates and positively charged cations (e.g. calcium) which are positioned between and hold together the negatively charged layers.

A variety of models can be proposed for compounds which would have clay soil removal properties. One model requires that the compound have two distinct characteristics. The first is the ability of the compound to adsorb onto the negatively charged layers of the clay particle. The second is the ability of the compound, once adsorbed, to push apart (swell) the negatively charged layers so that the clay particle loses its cohesive force and can be removed in the wash water.

One class of clay-soil removal compounds which appears to work according to this model are the polyethoxy zwitterionic surfactants disclosed in U.S. Patent 4,301,044 to Wentler et al., issued November 17, 1981. Representative of such compounds are those having the formula:

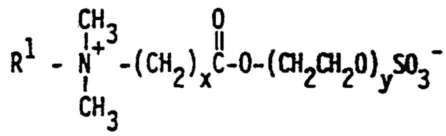

wherein $R^1$ is a $C_{14}$—$C_{20}$ alkyl group; x is 1 or an integer of from 3 to 5; and y is from 6 to 12. See also U.S. Patent 3,929,678 to Laughlin et al., issued December 30, 1975 (detergent composition containing polyethoxy zwitterionic surfactant plus other detergent surfactants); U.S. Patent 3,925,262 to Laughlin et al., issued December 9, 1975 (detergent composition containing polyethoxy zwitterionic surfactants with detergent builders); U.S. Patent 4,157,277 to Gosselink et al., issued June 26, 1979 ($C_4$ polyoxyalkylene zwitterionic surfactants useful in detergent compositions); U.S. Patent 4,165,334 to Gosselink et al., issued August 21, 1979 (sulfonium-type polyethoxy zwitterionic surfactants).

These polyethoxy zwitterionic surfactants are generally compatible with other detergent surfactants such as the nonionic, zwitterionic and ampholytic types. However, as indicated in the Wentler et al. patent, most anionic surfactants interfere with the particulate soil removal performance of these compounds; anionic soils such as fatty acids likewise interfere. Because anionic detergent surfactants form the most important class of such materials for use in detergent compositions, the lack of compatibility between these polyethoxy zwitterionic surfactants and anionic surfactants poses a significant handicap where particulate (clay) soil removal is desired.

In addition to clay soil removal, one of the other properties mentioned in the Laughlin et al. patents with regard to these polyethoxy zwitterionic surfactants is the ability to keep the removed soil in suspension during the laundering cycle. Soil which is removed from the fabric and suspended in the wash water can redeposit onto the surface of the fabric. This redeposited soil causes a dulling or "graying" effect which is especially noticeable on white fabrics. Because soil is normally hydrophobic, this graying effect is a particularly important problem for those fabrics made in total or in part from hydrophobic fibers, e.g. polyester.

To minimize this problem, anti-redeposition or whiteness maintenance agents can be included in the detergent composition. Besides the previously mentioned polyethoxy zwitterionic surfactants, there are a variety of other compounds which can be used as anti-redeposition agents. One class of agents are the water-soluble copolymers of acrylic or methacrylic acid with acrylic or methacrylic acid-ethylene oxide condensates disclosed in U.S. Patent 3,719,647 to Hardy et al., issued March 6, 1973. Another class of anti-redeposition agents are the cellulose and carboxymethylcellulose derivatives disclosed in U.S. Patent 3,597,416 to Diehl, issued August 3, 1971 (ionic combination of dodecyltrimethyl phosphonium chloride and sodium carboxymethyl cellulose), and U.S. Patent 3,523,088 to Dean et al., issued August 4, 1970 (anti-redeposition agent consisting of alkali metal carboxymethylcellulose and hydroxypropylcellulose). A mixture of compounds has also been used to provide not only anti-redeposition, but also clay soil removal properties. See U.S. Patent 4,228,044 to Cambre, issued October 14, 1980, which discloses detergent compositions having anti-redeposition and clay soil removal properties which can comprise a nonionic alkyl polyethoxy surfactant, a polyethoxy alkyl quaternary cationic surfactant and a fatty amide surfactant.

These anti-redeposition agents do have a number of significant handicaps. While effective to keep soil suspended, these compounds may lack additional clay soil removal properties. Moreover, as disclosed in the Diehl and Dean et al. patents, mixtures of compounds can be required to achieve the anti-redeposition benefit. To the extent that there are combined anti-redeposition/clay soil removal benefits as disclosed in the Cambre patent, mixtures of compounds are also required.

It is therefore an object of the present invention to provide compounds useful in detergent compositions which provide particulate soil, in particular clay soil, removal benefits.

It is a further object of the present invention to provide compounds useful in detergent compositions which provide clay soil removal benefits and are anionic detergent surfactant compatible.

It is yet another object of the present invention to provide compounds useful in detergent compositions having anti-redeposition properties.

It is yet a further object of the present invention to provide compounds useful in detergent compositions which combine both clay soil removal and anti-redeposition properties.

These and further objects of the present invention are hereinafter disclosed.

Background Art

*U.S. Patent 3,838,057 to Barnes et al., issued September 24, 1974,* discloses toilet bars containing ethoxylated quaternary ammonium compounds, including ethoxylated, quaternized polyethyleneimines (PEIs) taught to be useful in the detergent, textile, and polymer industries, as anti-static and softening agents. These ethoxylated quaternized PEIs have the formula:

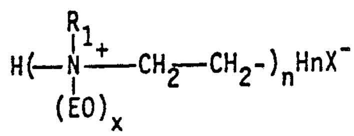

wherein $R_1$ is a compatible quaternary nitrogen substituent; n is at least 2; x is from 3 to 40; and $X^-$ is a compatible anion. Preferred compounds are those where $R_1$ is a $C_8$—$C_{22}$ alkyl group or the group:

$$R'COO(EO)_y—CH_2CHOHCH_2—$$

where R′ is a $C_8$—$C_{22}$ alkyl group and y is from 3 to 40. See also U.S. Patent 4,179,382 to Rudkin et al., issued December 18, 1979; U.S. Patent 4,152,272 to Young, issued May 1, 1979; and European Application 2,085 to Rudkin et al., published May 30, 1979, which disclose ethoxylated quaternized polyamines having $C_{10}$ to $C_{24}$ alkyl or alkenyl groups attached to one of the nitrogen atoms useful as fabric softeners.

*U.S. Patent 3,671,305 to Brown et al. issued June 20, 1972,* discloses zwitterionic monomers which form polymers used to treat films, sheets, and filamentary materials so as to give them a durable, hydrophilic, anti-static, anti-soiling, soil releasing finish. These monomers have the formula:

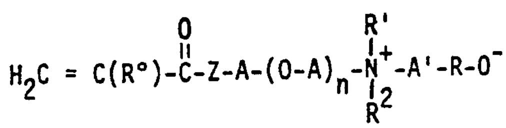

wherein n is 0 to 10; $R^0$ is hydrogen or methyl; Z is oxygen or —NH—; A can be a $C_2$—$C_3$ alkylene group (e.g. ethylene) when n is 1—10; R′ and $R^2$ can be $C_1$—$C_4$ alkyl; A′ is $C_1$—$C_4$ alkylene; and R can be $SO_2$.

*U.S. Patent 3,671,502 to Samour et al. issued June 20, 1972,* discloses co-polymers useful as binders in the production of non-wovens. These co-polymers consist essentially of from about 5 to about 90% of a monomer having the formula:

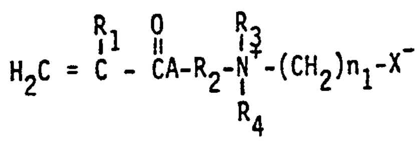

wherein $R_1$ is hydrogen or methyl; A is oxygen or —NH—; $R_2$ is ethylene, propylene, 2-hydroxypropylene or 2-acetoxypropylene; $R_3$ and $R_4$ are alkyl; $n_1$ is 1 to 4; and $X^-$ is $SO_3$— or $CO_2$—; and from about 10 to about 95% by weight of a hydroxyacrylate such as a polyglycerol acrylate/methacrylate having the formula:

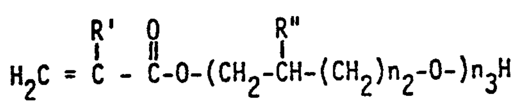

wherein R′ is hydrogen or methyl; R″ is hydrogen, methyl or hydroxy; $n_2$ is 0 when R″ is hydrogen or methyl (e.g. an ethylene group); and $n_3$ is 2 to 4.

*U.S. Patent 3,301,783 to Dickson, et al., issued January 31, 1967,* discloses oxyalkylated, acylated, alkylated, carbonylated and olefinated derivatives of polyalkyleneimines, in particular polyethyleneimines (PEIs). For the oxyalkylated derivatives, the alkylene oxide (e.g. ethylene oxide) is reacted with the polyalkyleneimine in a mole ratio of from 1:1 to 1000:1, and preferably in a ratio of from 1:1 to 200:1. Among the ethoxylated PEIs disclosed are Examples 1—$O_7$ and 1—$O_8$ formed by condensing 105 and 200 moles, respectively, of ethylene oxide with a 900 M.W. PEI. The degree of ethoxylation calculates out to about 4.5 and about 8 ethoxy groups per reactive site, respectively. See also Examples 27—$O_5$ and 27—$O_6$ which disclose ethoxylated polypropyleneimines (M.W. 500) which have about 4 and about 8 ethoxy units

per reactive site, respectively. Amongst the numerous disclosed uses of these polyalkyleneimine derivatives is a teaching that they are useful as detergents, softening agents, and anti-static agents. Preferred uses disclosed by this patent are as chelating agents, lubricating oil additives, emulsifying agents, and cutting oils.

*U.S. Patent 2,792,371 to Dickson, issued May 14, 1957,* teaches a process for breaking petroleum emulsions with oxyalkylated tetraethylene pentaamines (TEPA). Ethoxylated TEPAs specifically disclosed include those having about 5 (Example 3aa), about 7 (Example 4aa), about 8.5 (Example 5a) and about 15.5 (Example Bc) ethoxy units per reactive site. Similarly, U.S. patent 2,792,370 to Dickson issued May 14, 1957, teaches a process for breaking petroleum emulsions with oxyalkylated triethylene tetramines (TETAs) including those having about 5.5 (Example 3aa), about 7.5 (Example 4aa), about 9 (Example 5a) and about 16.5 (Example Bc) ethoxy units per reactive site. See also U.S. patent 2,792,372 to Dickson, issued May 14, 1957, (oxyalkylated higher PEAs used to break petroleum emulsions); U.S. patent 2,792,369 to Dickson, issued May 14, 1957 (oxyalkylated diethylene triamines used to break petroleum emulsions).

*U.S. Patent 4,171,278 to Andree et al., issued October 16, 1979,* discloses cold water detergent compositions containing a detergent surfactant (e.g. anionic) and a hydroxyalkyl amine in a weight ratio of 100:1 to 1:1. The amine can have the formula:

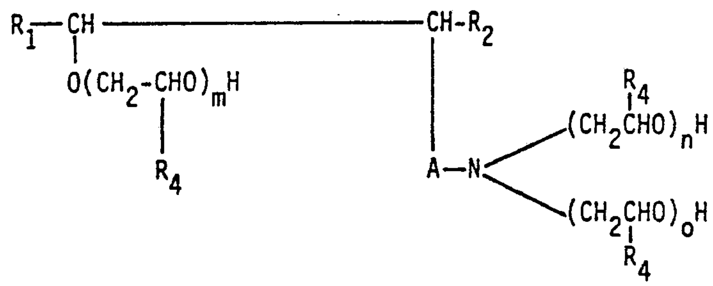

wherein $R_1$ is $C_1$—$C_{16}$ alkyl; $R_2$ is H or $C_1$—$C_{16}$ alkyl; $R_1 + R_2$ have 6—20 carbon atoms; $R_4$ is H or methyl; m, n, and o, are each 0 to 3 and A is bridging group such as

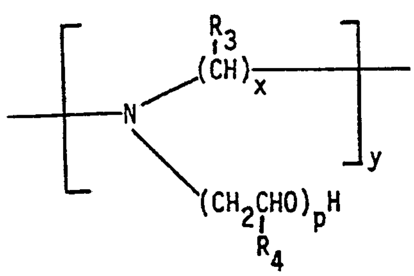

wherein $R_3$ is H or methyl; x is 2 to 6; y is 1 to 3; and p is 0 to 3; the sum of m to p being 1 to 5.5, and preferably 1 to 2. See also German Patent Document 2,165,900 to Henkel, published July 5, 1973, which discloses a washing agent for graying prevention formed by the reaction product of a PEI with an alkylglycidylether and ethylene oxide (2-hydroxyethyl moiety at each reactive site).

There are several patents which disclose detergent compositions, shampoo compositions and the like containing slightly ethoxylated PEIs (ethylene oxide:PEI weight ratio of 4:1 or less) to enhance the deposition and retention of particulate substances such as antimicrobials. See, for example, U.S. Patent 3,489,686 to Parran, issued January 13, 1970; U.S. Patent 3,580,853 to Parran, issued May 25, 1971: British Patent Specification 1,111,708 to Proctor & Gamble published May 1, 1968, U.S. Patent 3,549,546 to Moore, issued December 22, 1970; and U.S. Patent 3,549,542 to Holderby, issued December 22, 1970.

Disclosure of the Invention

The present invention relates to detergent compositions which comprise from 0.05 to 95% by weight of water-soluble cationic compounds having clay soil removal/anti-redeposition properties. These compounds are selected from the group consisting of:

(1) ethoxylated cationic monoamines having the formula:

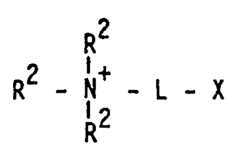

(2) ethoxylated cationic diamines having the formula:

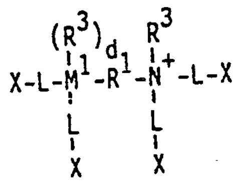 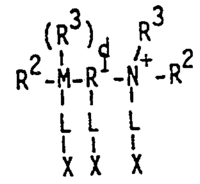 or 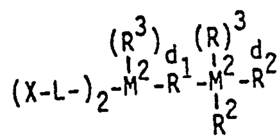

wherein $M^1$ is an $N^+$ or N group; each $M^2$ is an $N^+$ or N group, and at least one $M^2$ is an $N^+$ group;

(3) ethoxylated cationic polyamines having the formula:

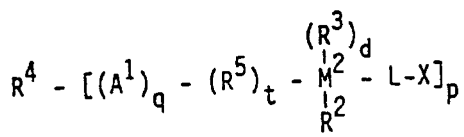

(4) ethoxylated cationic polymers which comprise a polymer backbone, at least 2 M groups and at least one L—X group, wherein M is a cationic group attached to or integral with the backbone and contains an $N^+$ positively charged center; and L connects groups M and X or connects group X to the polymer backbone; and

(5) mixtures thereof;

wherein $A^1$ is

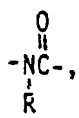, 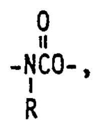, 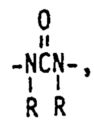, 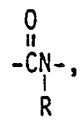, 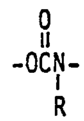, 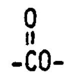, 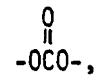, 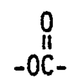, 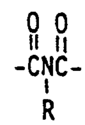 or -O-,

R is H or $C_1$—$C_4$ alkyl or hydroxyalkyl, $R^1$ is $C_2$—$C_{12}$ alkylene, hydroxyalkylene, alkenylene, arylene or alkarylene, or a $C_2$—$C_3$ oxyalkylene moiety having from 2 to 20 oxyalkylene units provided that no O—N bonds are formed; each $R^2$ is $C_1$—$C_4$ alkyl or hydroxyalkyl, the moiety —L—X or two $R^2$ together form the moiety $—(CH_2)_r—A^2—(CH_2)_s—$, wherein $A^2$ is —O— or $—CH_2—$, r is 1 or 2, s is 1 or 2 and r + s is 3 or 4; each $R^3$ is $C_1$—$C_8$ alkyl or hydroxyalkyl, benzyl, the moiety L—X, or two $R^3$ or one $R^2$ and one $R^3$ together form the moiety $—(CH_2)_r—A^2—(CH_2)_s—$; $R^4$ is a substituted $C_3$—$C_{12}$ alkyl, hydroxyalkyl, alkenyl, aryl or alkaryl group having p substitution sites; $R^5$ is $C_1$—$C_{12}$ alkylene, hydroxyalkylene, alkenylene, arylene or alkarylene, or a $C_2$—$C_3$ oxyalkylene moiety having from 2 to 20 oxyalkylene units provided that no O—O or O—N bonds are formed; X is a nonionic group selected from the group consisting of H, $C_1$—$C_4$ alkyl or hydroxyalkyl ester or ether groups, and mixtures thereof; L is a hydrophilic chain which contains the polyoxyalkylene moiety $—[(R^6O)_m(CH_2CH_2O)_n]—$; wherein $R^6$ is $C_3$—$C_4$ alkylene or hydroxyalkylene and m and n are numbers such that the moiety $—(CH_2CH_2O)_n—$ comprises at least 50% by weight of said polyoxyalkylene moiety; d is 1 when $M^2$ is $N^+$ and is O when $M^2$ is N; n is at least 12 for said cationic monoamines, is at least 6 for said cationic diamines and is at least 3 for said cationic polyamines and cationic polymers; p is from 3 to 8; q is 1 or 0; t is 1 or 0, provided that t is 1 when q is 1.

In addition to the cationic compounds, the detergent compositions further comprise from 1 to 75% by weight of a nonionic, anionic, ampholytic, zwitterionic, or cationic detergent surfactant or mixture thereof. In addition to these detergent surfactants, the detergent composition can optionally comprise from 0 to 80% by weight of a detergent builder.

The cationic compounds of the present invention provide clay soil removal benefits while being anionic detergent surfactant compatible. It is believed that the positively charged cationic groups cause adsorption of the compound onto the negatively charged layers of the clay particle. It is also believed that the hydrophilic ethoxy units attached to the compound swell the clay particle so that it loses its cohesive character and is swept away in the wash water.

The anti-redeposition benefits provided by these cationic compounds are also believed to be due to the positively charged cationic groups which cause it to be adsorbed onto soil suspended in the wash water. As more and more of these compounds adsorb onto the suspended soil, it becomes encased within a hydrophilic layer provided by the attached ethoxy units. As such, the hydrophilically encased soil is prevented from redepositing on fabrics, in particular hydrophobic fabrics such as polyester, during the laundering cycle.

Cationic Amines

The water-soluble cationic compounds of the present invention useful in detergent compositions include ethoxylated cationic monoamines, ethoxylated cationic diamines and ethoxylated cationic polyamines as previously defined.

In the preceding formulas for the cationic amines, $R^1$ can be branched (e.g.

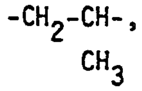, 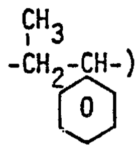) ; cyclic (e.g. 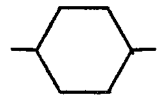 ),

or most preferably linear (e.g. $—CH_2CH_2—$, $—CH_2—CH_2—CH_2—$,

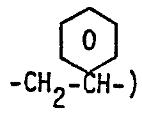)

alkylene, hydroxyalkylene, alkenylene, alkarylene or oxyalkylene. $R^1$ is preferably $C_2—C_6$ alkylene for the ethoxylated cationic diamines. Each $R^2$ is preferably methyl or the moiety —L—X; each $R^3$ is preferably $C_1—C_4$ alkyl or hydroxyalkyl, and most preferably methyl.

The positive charge of the $N^+$ groups is offset by the appropriate number of counter anions. Suitable counter anions include $Cl^-$, $Br^-$, $SO_3^{-2}$, $SO_4^{-2}$, $PO_4^{-2}$ or $MeOSO_3^-$. Particularly preferred counter anions are $Cl^-$ and $Br^-$.

X can be a nonionic group selected from hydrogen (H), $C_1—C_4$ alkyl or hydroxyalkyl ester or ether groups, or mixtures thereof. Preferred esters or ethers are the acetate ester and methyl ether, respectively. The particularly preferred nonionic groups are H and the methyl ether.

In the preceding formulas, hydrophilic chain L usually consists entirely of the polyoxyalkylene moiety $—[(R^6O)_m(CH_2CH_2—O_n]—$. The moieties $—(R^6O)_m—$ and $—(CH_2CH_2O)_n—$ of the polyoxyalkylene moiety can be mixed together or preferably form blocks of $—(R^6O)_m—$ and $—(CH_2CH_2O)_n—$ moieties. $R^6$ is preferably $C_3H_6$ (propylene); m is preferably from 0 to 5 and is most preferably 0, i.e. the polyoxyalkylene moiety consists entirely of the moiety $—(CH_2CH_2O)_n—$. The moiety $—(CH_2CH_2O)_n—$ preferably comprises at least 85% by weight of the polyoxyalkylene moiety and most preferably 100% by weight (m is 0).

In the preceding formulas, $M^1$ and each $M^2$ are preferably an $N^+$ group for the cationic diamines and polyamines.

Preferred ethoxylated cationic monoamines and diamines have the formula:

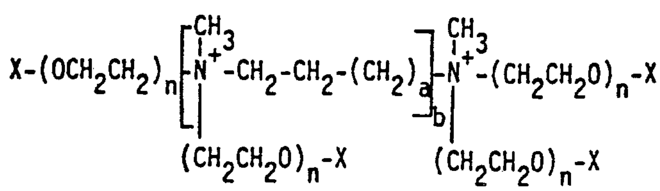

wherein X and n are defined as before, a is from 0 to 4 (e.g. ethylene, propylene, hexamethylene) b is 1 or 0. For preferred cationic monoamines (b = 0), n is preferably at least 12, with a typical range of from 15 to 35. For preferred cationic diamines (b = 1), n is at least 12 with a typical range of from 12 to 42.

In the preceding formula for the ethoxylated cationic polyamines, $R^4$ (linear, branched, or cyclic) is preferably a substituted $C_3—C_6$ alkyl, hydroxyalkyl or aryl group; $A^1$ is preferably

O

—CN—;

H

n is preferably at least 12, with a typical range of from 12 to 42; p is preferably from 3 to 6. When $R^4$ is a substituted aryl or alkaryl group, q is preferably 1 and $R^5$ is preferably $C_2—C_3$ alkylene. When $R^4$ is a substituted alkyl, hydroxyalkyl, or alkenyl group, and when q is 0, $R^5$ is preferably a $C_2—C_3$ oxyalkylene moiety; when q is 1, $R^5$ is preferably $C_2—C_3$ alkylene.

These ethoxylated cationic polyamines can be derived from polyamino amides such as:

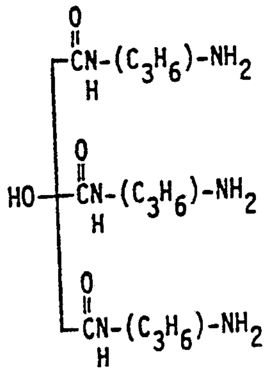

or

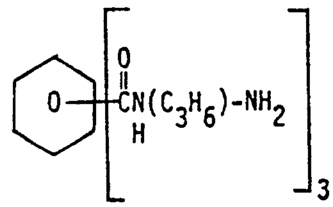

These ethoxylated cationic polyamines can also be derived from polyaminopropyleneoxide derivatives such as:

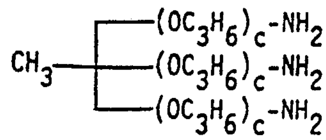

wherein each c is a number from 2 to 20.

### Methods for Making Cationic Amines

A. Method 1

Cationic amines of the present invention can be prepared according to the following scheme:

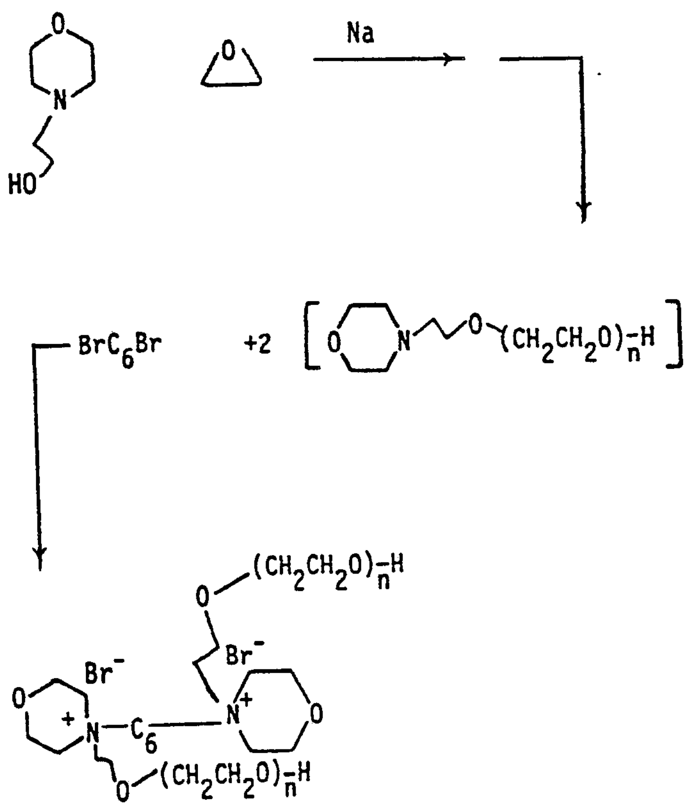


The synthesis of one such cationic amine is described as follows:

Example 1

Step 1: Ethoxylation

N-2-hydroxyethylmorpholine (0.8 moles) is placed in a flask equipped with mechanical stirrer, condenser, argon inlet, ethylene oxide sparger, and internal thermometer. After purging with argon, NaH (0.2 moles) is added to the flask. The reaction mixture is stirred until the NaH has reacted. Ethylene oxide is then added with vigorous stirring while maintaining the temperature at 80°—120°C. The reaction is stopped when the ethoxylated compound has a degree of ethoxylation of 11.

Step 2: Quaternization

The ethoxylated compound (0.03 moles) from step 1 is mixed with 1,6-dibromohexane (0.015 moles). The reaction mixture is mixed, sealed in a jar, and heated to 80°C for ten days to provide crude quaternized 1,6-bis[(-n-morpholiniopolyethoxylate (11)]-hexane dibromide.

B. Method 2

The ethoxylated cationic amines of the present invention can also be prepared by standard method for ethoxylating and quaternizing amines. There is preferably an initial step of condensing sufficient ethylene oxide to provide 2-hydroxyethyl groups at each reactive site (hydroxyethylation). This initial step can be omitted by starting with a 2-hydroxyethyl amine. The appropriate amount of ethylene oxide is then condensed with these 2-hydroxyethylamines using an alkali metal (e.g., sodium, potassium), or a hydride or hydroxide thereof, as the catalyst to provide the respective ethoxylated amines. The total degree of ethoxylation per reactive site (n) can be determined according to the following formula:

Degree of Ethoxylation = $E/(A \times R)$

wherein E is the total number of moles of ethylene oxide condensed (including hydroxyethylation), A is the number of moles of the starting amine, and R is the number of reactive sites (typically 3 for the monoamines, 4 for diamines, and $2 \times p$ for polyamines) for the starting amine. The ethoxylated amine can then be quaternized with an alkyl halide such as methyl bromide to form the ethoxylated cationic amine.

Representative synthesis of ethoxylated cationic amines of the present invention by this method as follows:

Example 2a

Step 1: Ethoxylation

1,6-hexamethylenediamine (100 g, 0.86 moles) was placed in a flask and heated under argon to 85°C. Ethylene oxide (EO) was bubbled into the flask. The reaction temperature was gradually raised to 120°C over a time period of 7.5 hours and then raised briefly to 158°C and cooled back to 100°C. H—NMR indicated that 4 moles of EO had been incorporated at this point.

Sodium spheres (1.24 g, 0.05 moles) were added and the reaction was stirred overnight after which the sodium had been consumed. The addition of EO was resumed and the reaction temperature raised to 120°C. After 3 hours, H-NMR indicated that 10 moles of EO had been incorporated per mole of the diamine. An additional portion of sodium spheres (3.6 g, 0.15 moles) was added and ethoxylation was continued. The temperature was allowed to rise to 125°—130°C. Ethoxylation was continued for 22 hours. The reaction was terminated when 96 moles of EO had been taken up per mole of the diamine to give a total degree of ethoxylation of 24.

Step 2: Quaternization

A portion of the ethoxylated diamine (25 g, 0.0057 moles) from step 1 was quaternized by first dissolving the diamine in methanol (100 ml) containing a little NaOH. An excess of methyl bromide was added using a dry ice condenser. The reaction mixture was allowed to stand overnight after which the pH had dropped to 4. NaOH in methanol was added to raise the pH to 9. The quaternized compound was isolated by stripping off the methanol and remaining methyl bromide. The resulting moist material was washed with several portions of dichloromethane. The combined dichloromethane washes were filtered to remove solids and stripped to yield 27.5 g of a yellow oil that solidified at room temperature. This oil contained the ethoxylated quaternized diamine.

Example 2b

Step 1: Ethoxylation

Dried triethanolamine (TEA) (16.01 g, 0.107 moles) was catalyzed with 0.5 g (0.0125 moles) 60% NaH in mineral oil. Ethylene oxide (EO) was then added under atmospheric pressure with stirring at 150°—170°C. After 23 h 36.86 g (8.38 moles) of EO had been added to give a calculated total degree of ethoxylation of 26.1. The ethoxylated TEA (PEI 17) was a light brown waxy solid.

Step 2: Quaternization

A portion of the ethoxylated TEA (31.68 g, 0.0088 moles) from step 1 was dissolved in $H_2O$ to give a 50% solution. The solution was heated 60°—70°C while being stirred magnetically. Methyl bromide gas was swept through the reactor for 8 h, with sodium bicarbonate being added as needed to maintain the pH at 7 or greater. After quaternization, the solution was dialized for 3 h to remove the salts. Then the solution was diluted to give 10% aqueous slightly cloudy gold colored solution containing the ethoxylated, quaternized TEA.

Cationic Polymers

The water-soluble cationic polymers of the present invention comprise a polymer backbone, att least 2 M groups and at least one L—X group, wherein M is a cationic group attached to or integral with the backbone; X is a nonionic group selected from the group consisting of H, $C_1$—$C_4$ alkyl or hydroxyalkyl ester or ether groups, and mixtures thereof; and L is a hydrophilic chain connecting groups M and X or connecting X to the polymer backbone.

As used herein, the term "polymer backbone" refers to the polymeric moiety to which groups M and L—X are attached to or integral with. Included within this term are oligomer backbones (2 to 4 units), and true polymer backbones (5 or more units).

As used herein, the term "attached to" means that the group is pendent from the polymer backbone, examples of which are represented by the following general structures A and B:

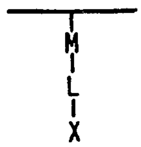

A

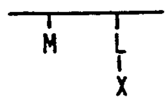

B

As used herein, the term "integral with" means that the group forms part of the polymer backbone, examples of which are represented by the following general structures C and D:

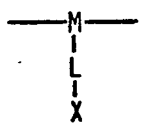

C

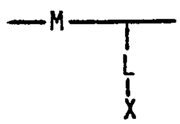

D

Any polymer backbone can be used as long as the cationic polymer formed is water-soluble and has clay soil removal/anti-redeposition properties. Suitable polymer backbones can be derived from the polyurethanes, the polyesters, the polyethers, the polyamides, the polyimides, the polyacrylates, the polyacrylamides, the polyvinylethers, the polyethylenes, the polypropylenes, the polystyrenes, the polyalkyleneamines, the polyalkyleneimines, the polyvinylamines, the polyallylamines, the polydiallylamines, the polyvinylpyridines, the polyaminotriazoles, polyvinyl alcohol, the aminopolyureylenes, and mixtures thereof.

M can be any compatible cationic group which comprises an $N^+$ (quaternary), positively charged center. The quaternary positively charged center can be represented by the following general structures E and F:

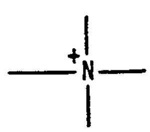

E

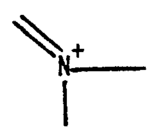

F

Particularly preferred M groups are those containing a quaternary center represented by general structure E. The cationic group is preferably positioned close to or integral with the polymer backbone.

The positive charge of the $N^+$ centers is offset by the appropriate number of counter anions. Suitable counter anions include $Cl^-$, $Br^-$, $SO_3^{-2}$, $SO_4^{-2}$, $PO_4^{-2}$ or $MeOSO_3^-$. Paricularly preferred counter anions are $Cl^-$ and $Br^-$.

X can be a nonionic group selected from hydrogen (H), $C_1$—$C_4$ alkyl or hydroxyalkyl ester or ether groups, and mixtures thereof. The preferred ester or ether groups are the acetate ester and methyl ether, respectively. The particularly preferred nonionic groups are H and the methyl ether.

The cationic polymers of the present invention normally have a ratio fo cationic groups M to nonionic groups X of from 1:1 to 1:2. However, for example, by appropriate copolymerization of cationic, nonionic (i.e. containing the group L—X), and mixed cationic/nonionic monomers, the ratio of cationic groups M to nonionic groups X can be varied. The ratio of groups M to groups X can usually range 2:1 to 1:10. In preferred cationic polymers, the ratio is from 1:1 to 1:5. The polymers formed from such copolymerization are typically random, i.e. the cationic, nonionic, and mixed cationic/nonionic monomers copolymerize in a nonrepeating sequence.

The units which contain groups M and groups L—X can comprise 100% of the cationic polymers of the present invention. However, inclusion of other units (preferably nonionic) in the polymers is also permissible. Examples of other units include acrylamides, vinyl ethers, and those containing unquaternized tertiary amine groups ($M^1$) containing an N center. These other units can comprise from 0 to 90% of the

polymer (from 10 to 100% of the polymer being units containing M and L—X groups, including $M^1$—L—X groups). Normally, these other units comprise from 0 to about 50% of the polymer (from 50 to 100% of the polymer being units containing M and L—X groups).

The number of groups M and L—X each usually ranges from 2 to 200. Typically, the number of groups M and L—X are each from 3 to 100. Preferably, the number of groups M and L—X are each from 3 to 40.

Other than moieties for connecting groups M and X, or for attachment to the polymer backbone, hydrophilic chain L usually consists entirely of the polyoxyalkylene moiety $-[(R'O)_m(CH_2CH_2O)_n]-$. The moieties $-(R'O)_m-$ and $(CH_2CH_2O)_n-$ of the polyoxyalkylene moiety can be mixed together, or preferably form blocks of $-(R'O)_m-$ and $-(CH_2CH_2O)_n-$ moieties. R' is preferably $C_3H_6$ (propylene); m is preferably from 0 to 5, and most preferably 0; i.e. the polyoxyalkylene moiety consists entirely of the moiety $-(CH_2CH_2O)_n-$. The moiety $-(CH_2CH_2O)_n-$ preferably comprises at least 85% by weight of the polyoxyalkylene moiety, and most preferably 100% by weight (m is 0). For the moiety $-(CH_2CH_2O)_n-$, n is usually from 3 to 100. Preferably, n is from 12 to 42.

A plurality (2 or more) of moieties —L—X can also be hooked together and attached to group M or to the polymer backbone, examples of which are represented by the following general structures G and H:

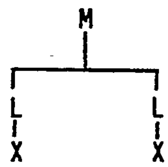
G

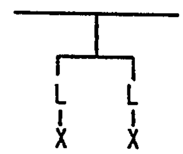
H

Structures such as G and H can be formed, for example, by reacting glycidol with group M or with the polymer backbone, and ethoxylating the subsequently formed hydroxy groups.

Representative classes of cationic polymers of the present invention are as follows:

A. Polyurethane, Polyester, Polyether, Polyamide

One class of suitable cationic polymers are derived from polyurethanes, polyesters, polyethers, polyamides. These polymers comprise units selected from those having formulas I, II and III:

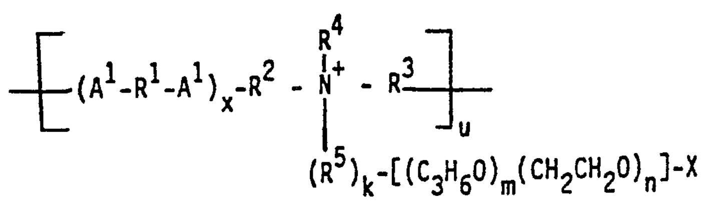
I

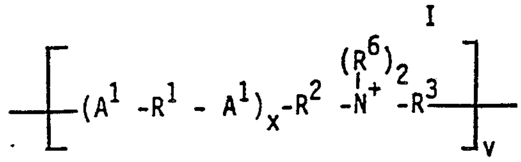
II

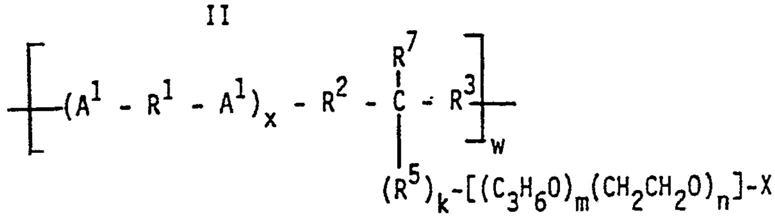
III

wherein $A^1$ is

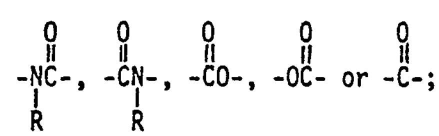

x is 0 or 1; R is H or $C_1$—$C_4$ alkyl or hydroxyalkyl; $R^1$ is $C_2$—$C_{12}$ alkylene, hydroxyalkylene, alkenylene, cycloalkylene, arylene or alkarylene, or a $C_2$—$C_3$ oxyalkylene moiety having from 2 to 20 oxyalkylene units provided that no O—O or O—N bonds are formed with $A^1$; when

x is 1, $R^2$ is $-R^5-$ except when

$$A^1 \text{ is } -\overset{O}{\overset{\|}{C}}-,$$

or is $-(OR^8)_y-$ or $-OR^5-$ provided that no O—O or N—O bonds are formed with $A^1$, and $R^3$ is $-R^5-$ except when

$$A^1 \text{ is } -\overset{O}{\overset{\|}{C}}-,$$

or is $-(R^8O)-_y$ or $-R^5O-$ provided that no O—O or O—N bonds are formed with $A^1$; when x is O, $R^2$ is

$$-(OR^8)_y-,\ -OR^5-,\ -\underset{\|}{\underset{O}{C}}OR^5-,\ -O\underset{\|}{\underset{O}{C}}R^5-,\ -O\underset{\|}{\underset{O}{C}}OR^5-,\ -N\underset{|\,\|}{\underset{RO}{C}}R^5-,\ -N\underset{|\,\|}{\underset{RO}{C}}OR^5-,\ -\underset{\|\,|}{\underset{OR}{C}}NR^5-, \text{ or } -O\overset{OR}{\overset{\|\,|}{C}}NR^5-,$$

and $R^3$ is $-R^5-$; $R^4$ is $C_1-C_4$ alkyl or hydroxyalkyl, or the moiety $-(R^5)_k-[(C_3H_6O)_m(CH_2CH_2O)_n]-X$; $R^5$ is $C_1-C_{12}$ alkylene, hydroxyalkylene, alkenylene, arylene, or alkarylene; each $R^6$ is $C_1-C_4$ alkyl or hydroxyalkyl, or the moiety $-(CH_2)_r-A^2-(CH_2)_s-$, wherein $A^2$ is $-O-$ or $-CH_2-$; $R^7$ is H or $R^4$; $R^8$ is $C_2-C_3$ alkylene or hydroxyalkylene; X is H,

$$-\overset{O}{\overset{\|}{C}}R^9,\ -R^9$$

or a mixture thereof,
wherein $R^9$ is $C_1-C_4$ alkyl or hydroxyalkyl; k is 0 or 1; m and n are numbers such that the moiety $-(CH_2CH_2O)_n-$ comprises at least 85% by weight of the moiety $-[(C_3H_6O)_m(CH_2CH_2O)_n]-$; m is from 0 to 5; n is at least 3; r is 1 or 2, s is 1 or 2, and r + s is 3 or 4; y is from 2 to 20; the number of u, v and w are such that there are at least 2 $N^+$ centers and at least 2 X groups.

In the above formulas, $A^1$ is preferably

$$-\underset{|}{\underset{R}{N}}\overset{O}{\overset{\|}{C}}- \text{ or } -\overset{O}{\overset{\|}{C}}\underset{|}{\underset{R;}{N}}-$$

$A^2$ is preferably $-O-$; x is preferably 1; and R is preferably H. $R^1$ can be linear

(e.g. $-CH_2-CH_2-CH_2-$, 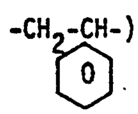) or branched (e.g. $-CH_2-\underset{|}{\underset{CH_3}{C}}H-$, 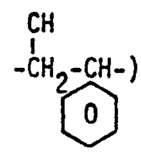)

alkylene, hydroxyalkylene, alkenylene, cycloalkylene, alkarylene or oxyalkylene; when $R^1$ is a $C_2-C_3$ oxyalkylene moiety, the number of oxyalkylene units is preferably from 2 to 12; $R^1$ is preferably $C_2-C_6$ alkylene or phenylene, and most preferably $C_2-C_6$ alkylene (e.g. ethylene, propylene, hexamethylene). $R^2$ is preferably $-OR^5-$ or $-(OR^8)_y-$; $R^3$ is preferably $-R^5O-$ or $-(R^8O)_y-$; $R^4$ and $R^6$ are preferably methyl. Like $R^1$, $R^5$ can be linear or branched, and is preferably $C_2-C_3$ alkylene; $R^7$ is preferably H or $C_1-C_3$ alkyl; $R^8$ is preferably ethylene; $R^9$ is preferably methyl; X is preferably H or methyl; k is preferably O; m is preferably O; r and s are each preferably 2; y is preferably from 2 to 12.

In the above formulas, n is preferably at least 6 when the number of N+ centers and X groups is 2 or 3; n is most preferably at least 12, with a typical range of from 12 to 42 for all ranges of u + v + w. For homopolymers (v and w are 0), u is preferably from 3 to 40, and is most preferably from 3 to 20. For random copolymers (u is at least 1 or preferably 0), v and w are each preferably from 3 to 40.

B. Polyacrylate, Polyacrylamide, Polyvinylether

Another class of suitable cationic polymers are derived from polyacrylates, polyacrylamides or polyvinylethers. These polymers comprise units selected from those having formulas IV, V and VI:

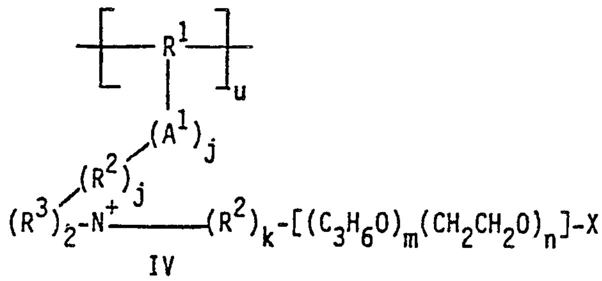

IV

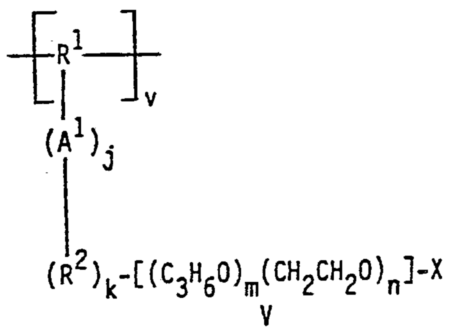

V

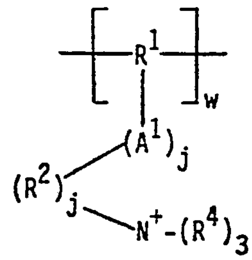

VI

wherein $A^1$ is

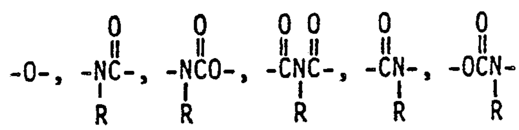

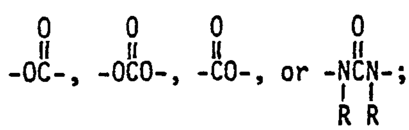 R is H or $C_1$-$C_4$ alkyl hydroxyalkyl; $R^1$ is substituted $C_2$—$C_{12}$ alkylene, hydroxyalkylene, alkenylene, arylene or alkarylene, or $C_2$—$C_3$ oxyalkylene; each $R^2$ is $C_1$—$C_{12}$ alkylene, hydroxyalkylene, alkenylene, arylene or alkarylene; each $R^3$ is $C_1$—$C_4$ alkyl or hydroxyalkyl, the moiety $—(R^2)_k—[(C_3H_6O)_m(CH_2CH_2O)_n]—X$, or together form the moiety $—(CH_2)_r—A^2—(CH_2)_s—$, wherein $A^2$ is —O— or $—CH_2—$; each $R^4$ is $C_1$—$C_4$ alkyl or hydroxyalkyl, or two $R^4$ together form the moiety $—(CH_2)_r—A^2—(CH_2)_s—$; X is H,

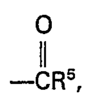

$—R^5$ or mixture thereof, wherein $R^5$ is $C_1$—$C_4$ alkyl or hydroxyalkyl; j is 1 or 0; k is 1 or 0; m and n are numbers such that the moiety $—(CH_2CH_2O)_n—$ comprises at least 85% by weight of the moiety $—[(C_3H_6O)_m(CH_2CH_2O)_n)—$; m is from 0 to 5; n is at least 3; r is 1 or 2, s is 1 or 2 and r + s is 3 or 4; the number of u, v and w are such that there are at least 2 N+ centers and at least 2 X groups.

In the above formulas, $A^1$ is preferably

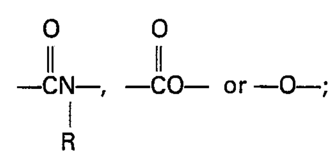

$A^2$ is preferably —O—; R is preferably H. $R^1$ can be linear (e.g. 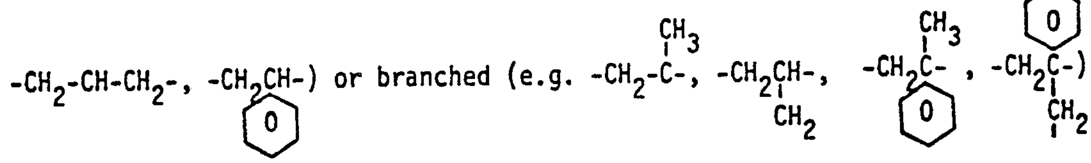 or branched (e.g.) substituted alkylene, hydroxyalkylene, alkenylene, alkarylene or oxyalkylene; $R^1$ is preferably substituted $C_2$—$C_6$ alkylene or substituted $C_2$—$C_3$ oxyalkylene, and most preferably

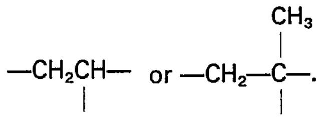

Each $R^2$ is preferably $C_2$—$C_3$ alkylene; each $R^3$ and $R^4$ are preferably methyl; $R^5$ is preferably methyl; X is preferably H or methyl; j is preferably 1; k is preferably 0; m is preferably 0; r and s are each preferably 2.

In the above formulas, n, u, v and w can be varied according to the n, u, v and w for the polyurethane.

C. Polyalkyleneamine, Polyalkyleneimine

Another class of suitable cationic polymers are derived from polyalkyleneamines or polyalkyleneimines. These polymers comprise units selected from those having formulas VII and VIII and IX:

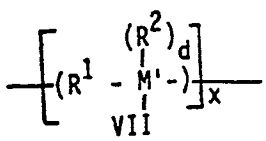
VII

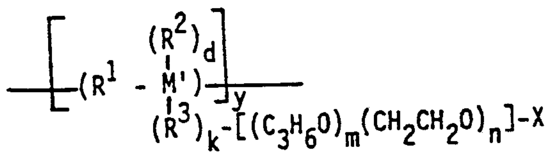
VIII

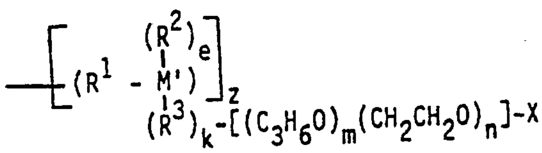
IX

wherein $R^1$ is $C_2$—$C_{12}$ alkylene, hydroxyalkylene, alkenylene, cycloalkylene, arylene or alkarylene, or a $C_2$—$C_3$ oxyalkylene moiety having from 2 to 20 oxyalkylene units provided that no O—N bonds are formed; each $R^2$ is $C_1$—$C_4$ alkyl or hydroxyalkyl, or the moiety $—(R^3)_k—[(C_3H_6O)_m(CH_2CH_2O)_n]—X$; $R^3$ is $C_1$—$C_{12}$ alkylene, hydroxyalkylene, alkenylene, arylene or alkarylene; M′ is an $N^+$ or N center; X is H,

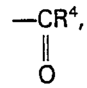

$—R^4$ or mixture thereof, wherein $R^4$ is $C_1$—$C_4$ alkyl or hydroxyalkyl; d is 1 when M′ is $N^+$ and is 0 when M′ is N; e is 2 when M′ is $N^+$ and is 1 when M′ is N; k is 1 or 0; m and n are numbers such that the moiety $—(CH_2CH_2O)_n—$ comprises at least 85% by weight of the moiety $—[(C_3H_6O)_m(CH_2CH_2O)_n$; m is from 0 to 5; n is at least 3; the number of x, y and z are such that there are at least 2 M′ groups, at least 2 $N^+$ centers and at least 2 X groups.

In the above formulas, $R^1$ can be varied like $R^1$ of the polyurethane; each $R^2$ is preferably methyl or the moiety $—(R^3)_k—[(C_3H_6O)_m(CH_2CH_2O)_n]—X$; $R^3$ is preferably $C_2$—$C_3$ alkylene; $R^4$ is preferably methyl; X is preferably H; k is preferably 0; m is preferably 0.

In the above formulas, n is preferably at least 6 when the number of M′ and X groups is 2 or 3; n is most preferably at least 12, with a typical range of from 12 to 42 for all ranges of x + y + z. Typically, x + y + z is from 2 to 40, and preferably from 2 to 20. For short chain length polymers, x + y + z can range from 2 to 9 with from 2 to 9 $N^+$ centers and from 2 to 11 X groups. For long chain length polymers, x + y + z is at least 10, with a preferred range of from 10 to 42. For the short and long chain length polymers, the M′ groups are typically a mixture of from 50 to 100% $N^+$ centers and from 0 to 50% N centers.

Preferred cationic polymers within this class are derived from the $C_2$—$C_3$ polyalkyleneamines (x + y + z is from 2 to 9) and polyalkyleneimines (x + y + z is at least 10, preferably from 10 to 42). Particularly preferred cationic polyalkyleneamines and polyalkyleneimines are the cationic polyethyleneamines (PEAs)

and polyethyleneimines (PEIs). These preferred cationic polymers comprise units having the general formula:

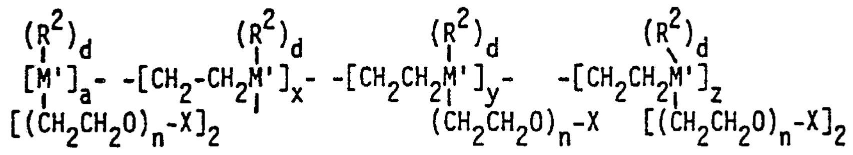

wherein $R^2$ (preferably methyl), M', X, d, x, y, z and n are defined as before; a is 1 or 0.

Prior to ethoxylation, the PEAs used in preparing cationic polymers of the present invention have the following general formula:

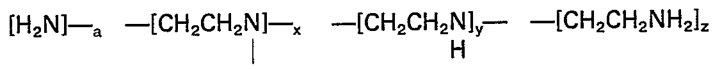

wherein x + y + z is from 2 to 9, and a is 0 or 1 (molecular weight of from 100 to 400). Each hydrogen atom attached to each nitrogen atom represents an active site for subsequent ethoxylation. For preferred PEAs, x + y + z is from 3 to 7 (molecular weight of from 140 to 310). These PEAs can be obtained by reactions involving ammonia and ethylene dichloride, followed by fractional distillation. The common PEAs obtained are triethylenetetramine (TETA) and tetraethylenepentamine (TEPA). Above the pentamines, i.e., the hexamines, heptamines, octamines and possibly nonamines, the cogenerically derived mixture does not appear to separate by distillation and can include other materials such as cyclic amines and particularly piperazines. There can also be present cyclic amines with side chains in which nitrogen atoms appear. See U.S. Patent 2,792,372 to Dickson, issued May 14, 1957, which describes the preparation of PEAs.

The minimum degree of ethoxylation required for preferred clay soil removal/anti-redeposition performance can vary depending upon the number of units in the PEA. Where y + z is 2 or 3, n is preferably at least 6. Where y + z is from 4 to 9, suitable benefits are achieved when n is at least 3. For preferred cationic PEAs, n is at least 12, with a typical range of from 12 to 42.

The PEIs used in preparing the polymers of the present invention have a molecular weight of at least 440 prior to ethoxylation, which represents at least 10 units. Preferred PEIs used in preparing these polymers have a molecular weight of from 600 to 1800. The polymer backbone of these PEIs can be represented by the general formula:

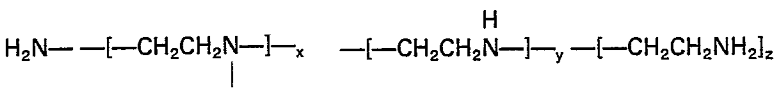

wherein the sum of x, y and z represents a number of sufficient magnitude to yield a polymer having the molecular weights previously specified. Although linear polymer backbones are possible, branch chains can also occur. The relative proportions of primary, secondary and tertiary amine groups present in the polymer can vary, depending on the manner of preparation. The distribution of amine groups is typically as follows:

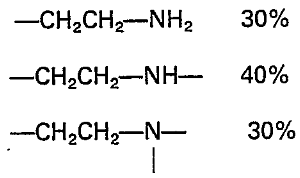

Each hydrogen atom attached to each nitrogen atom of the PEI represents an active site for subsequent ethoxylation. These PEIs can be prepared, for example, by polymerizing ethyleneimine in the presence of a catalyst such as carbon dioxide, sodium bisulfite, sulfuric acid, hydrogen peroxide, hydrochloric acid, acetic acid, etc. Specific methods for preparing PEIs are disclosed in U.S. Patent 2,182,306 to Ulrich et al., issued December 5, 1939; U.S. Patent 3,033,746 to Mayle et al., issued May 8, 1962; U.S. Patent 2,208,095 to Esselmann et al., issued July 16, 1940; U.S. Patent 2,806,839 to Crowther, issued September 17, 1957; and U.S. Patent 2,553,696 to Wilson, issued May 21, 1951.

As defined in the preceding formulas, n is at least 3 for the cationic PEIs. However, it should be noted that the minimum degree of ethoxylation required for suitable clay soil removal/anti-redeposition performance can increase as the molecular weight of the PEI increases, especially much beyond 1800. Also, the degree of ethoxylation for preferred polymers increases as the molecular weight of the PEI increases. For PEIs having a molecular weight of at least 600, n is preferably at least 12, with a typical range of from 12 to 42. For PEIs having a molecular weight of at least 1800, n is preferably at least 24, with a typical range of from 24 to 42.

D. Diallylamine Polymers

Another class of suitable cationic polymers are those derived from the diallylamines. These polymers comprise units selected from those having formulas X and XI:

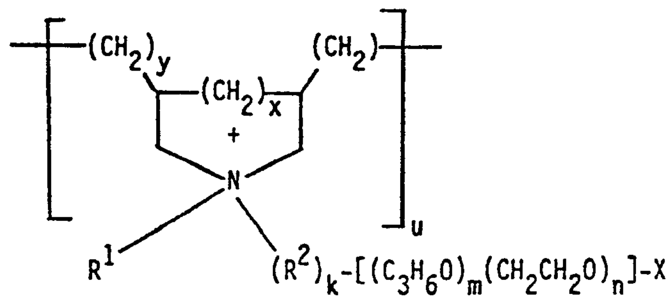

X

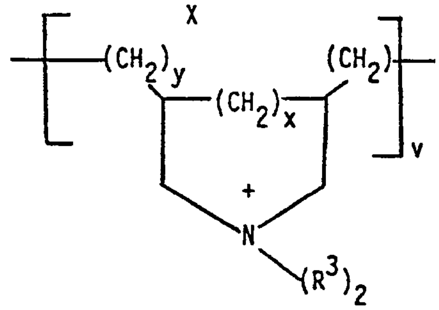

XI

wherein $R^1$ is $C_1$—$C_4$ alkyl or hydroxyalkyl, or the moiety — $(R^2)_k$—$[(C_3H_6O)_m(CH_2CH_2O)_n]$—X; $R^2$ is $C_1$—$C_{12}$ alkylene, hydroxylakylene, alkylene, arylene or alkarylene; each $R^3$ is $C_1$—$C_4$ alkyl or hydroxyalkyl, or together form the moiety —$(CH_2)_r$—A—$(CH_2)_s$—, wherein A is —O— or —$CH_2$—; X is H,

$$-\underset{\underset{O}{\|}}{C}R^4,$$

—$R^4$ or mixture thereof, wherein $R^4$ is $C_1$—$C_4$ alkyl or hydroxyalkyl; k is 1 or 0; m and n are numbers such that the moiety —$(CH_2CH_2O)_n$— comprises at least 85% by weight of the moiety $[(C_3H_6O)_m(CH_2CH_2O)_n]$—; m is from 0 to 5; n is at least 3; r is 1 or 2, s is 1 or 2, and r + s is 3 or 4; x is 1 or 0; y is 1 when x is 0 and 0 when x is 1; the number of u and v are such that there are at least 2 N+ centers and at least 2 X groups.

In the above formulas, A is preferably —O—; $R^1$ is preferably methyl; each $R^2$ is preferably $C_2$—$C_3$ alkylene; each $R^3$ is preferably methyl; $R^4$ is preferably methyl; X is preferably H; k is preferably 0; m is preferably 0; r and s are each preferably 2.

In the above formulas, n is preferably at least 6 when the number of N+ centers and X groups are each 2 or 3, n is preferably at least 12, with a typical range of from 12 to 42 for all ranges of u + v. Typically, v is 0, and u is from 2 to 40, and preferably from 2 to 20.

Methods for Making Cationic Polymers

A. Polyurethane

The polyurethane versions of the present invention can be prepared according to the following general scheme.

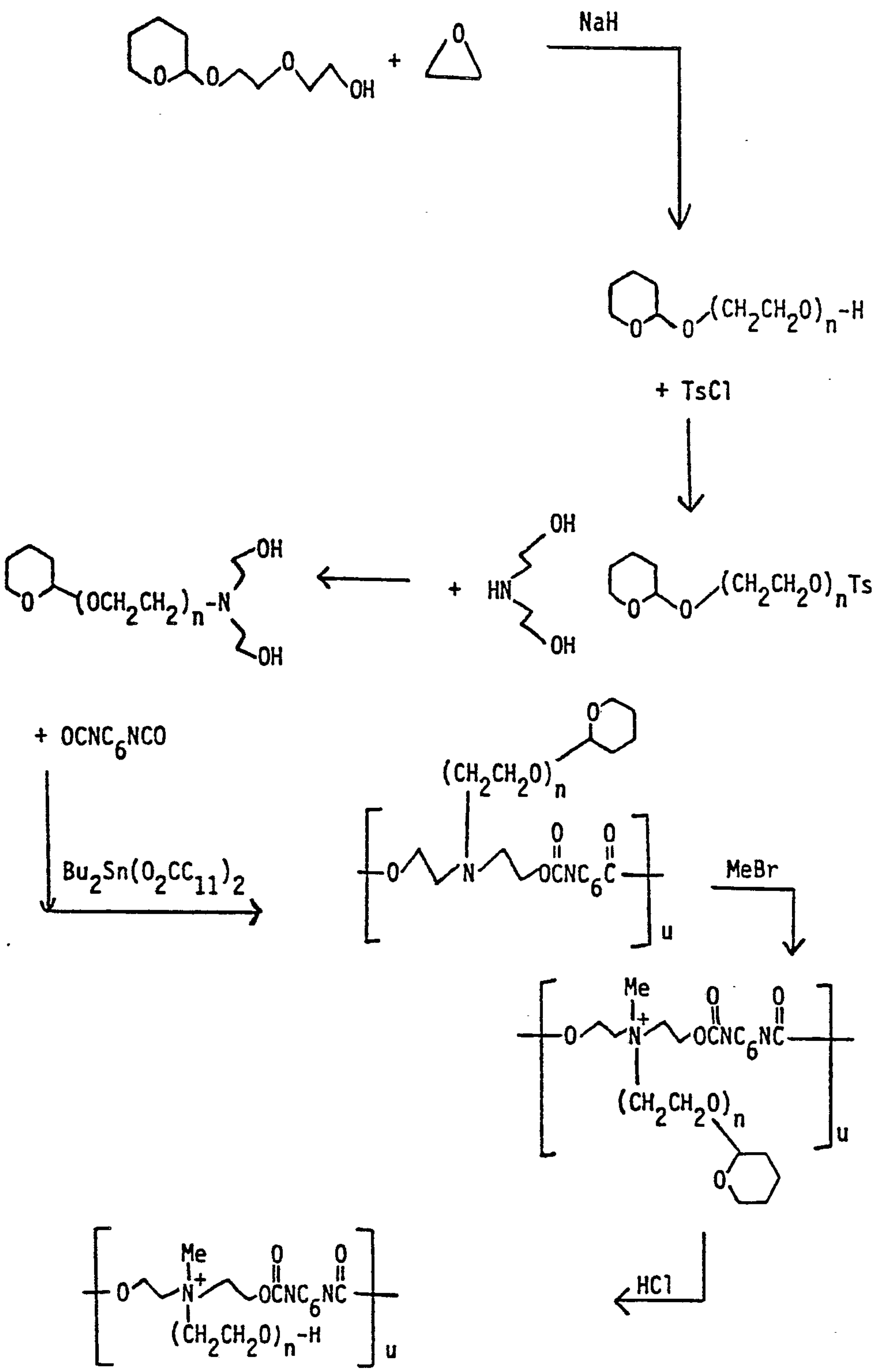

Example 3

Step 1: Ethoxylation

The monotetrahydropyranyl ether of diethylene glycol (1.77 moles) [Compt. Rend., *260*, 1399—1401 (1965)] is ethoxylated using 5 mole % NaH to generate a catalytic amount of the corresponding alkoxide. Ethoxylation is conducted at 90°—120°C until 22 moles (n = 22) of ethylene oxide is taken up for each mole of the starting alcohol to form the ethoxylated compound.

Step 2: Tosylation

The ethoxylated compound from step 1 is dissolved in 1000 ml of acetonitrile and then cooled to 10°C. To this solution is added 2.67 moles of tosyl chloride dissolved in 500 ml of acetonitrile and cooled to 10°C and then 2.9 moles of triethylamine is added. After the reaction is complete, $H_2O$ is added to decompose the remaining tosyl chloride.

Step 3: Amination

To the reaction mixture from step 3 is added 3.4 moles of diethanolamine. After heating for 18 h at 80°C, the reaction mixture is cooled and carefully acidified with HCl to a pH just above 7 and then extracted with ether. The aqueous phase is then extracted with a mixture of ether:acetonitrile (ratio of 5:2) twice. The aqueous phase is separated and then made basic with 50% NaOH. This aqueous phase is extracted with dichloromethane (2000 ml). The lower layer is separated and then extracted 3 times with 2000 ml portions of 1/4 saturated NaCl solution while adding enough 50% NaOH to make the aqueous phase strongly basic (pH of 11). The lower organic layer is stripped to give the desired aminated compound. Toluene (200 ml) is added and the mixture stripped again to give the desired aminated monomer.

Step 4: Polymerization

The monomer from step 3 is dissolved in chloroform free of ethanol stabilizer. The monomer is previously evacuated in a Kugelrohr at 80°—90°C under a vacuum (pressure of 133.3 Pa (1 mmHg) for at least 18 hours. The monomer in the chloroform is then dried overnight with 0.3 mm (3Å) molecular sieves and then transferred to a dry flask (equipped with mechanical stirrer) under argon. To the monomer is added dibutyltin dilaurate catalyst (0.058 mole equiv.) in chloroform under argon. To the stirred reaction mixture is then added 0.7 moles of hexamethylenediisocyanate per mole of aminated monomer over a 5 minute period. The reaction mixture is stirred at room temperature for 18 hours. The chloroform is removed under a vacuum at 70°C to give the resulting polymer.

Step 5: Quaternization and Removal of Protecting Groups

The polymer from step 4 is dissolved in methanol and an excess of methyl bromide is passed in. After 5 hours, the pH is adjusted to 4 with aqueous HCl and is then allowed to stand overnight to solvolyze the tetrahydropyranyl protecting group. The solution is then neutralized with NaOH and stripped to give the crude polyurethane. This crude polyurethane is dissolved in chloroform and filtered to remove any salts. The chloroform is stripped away to give the desired, largely salt-free polymer.

B. Random Copolymer of Ethoxylated Acrylate and a Cationic Methacrylamide

The random copolymer versions of the present invention can be prepared according to the following general scheme:

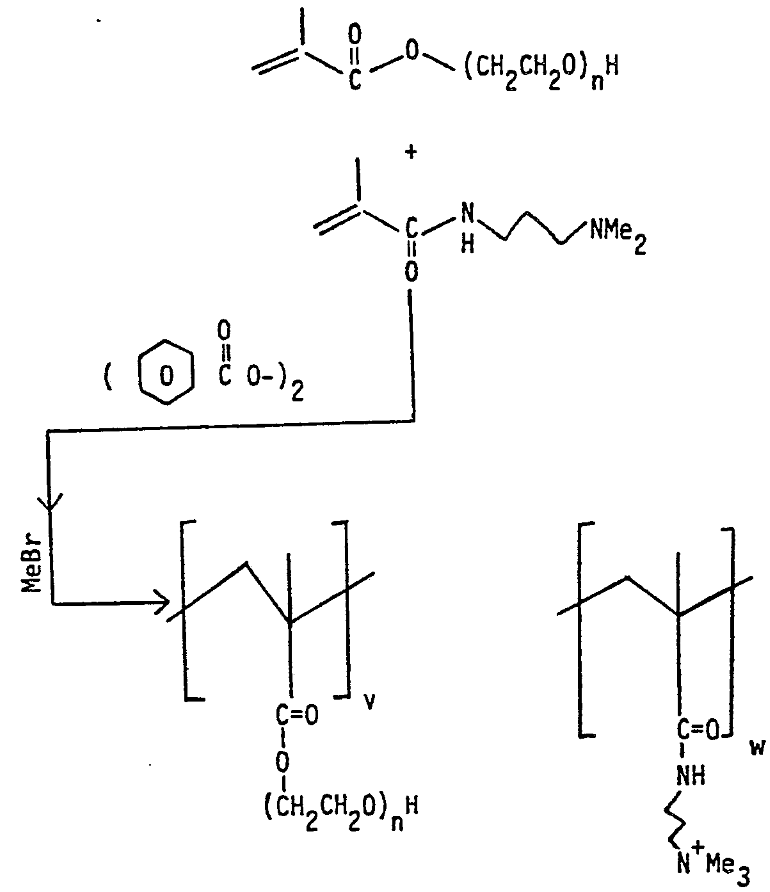


The synthesis of one such random copolymer is described as follows:

Example 4

Decaethylene glycol monomethacrylate monomer (0.008 moles) and N-(3-dimethylaminopropyl)-methacrylamide monomer (0.011 moles) are dissolved in 40 ml of acetonitrile. The reaction mixture is purged of oxygen by bubbling argon through it. A 0.23 g portion of benzoyl peroxide is separately dissolved in 10 ml of acetonitrile and similarly purged. The reaction mixture is heated to reflux and the benzoyl peroxide solution then added dropwise over 0.5 hours. Next, 0.28 g of azobisisobutyronitrile in 5 ml of acetonitrile is added to the reaction mixture and heating continued overnight. A stream of methyl bromide is then passed through the reaction mixture which is then warmed slightly for 1 hour. The desired random copolymer is isolated by stripping off the solvent.

C. Quaternized Polyethyleneamines and Polyethyleneimines

Quaternized polyethyleneamines and polyethyleneimines can be prepared using standard methods for ethoxylating amines, with subsequent quaternization. Representative syntheses of such polyethyleneamines and polyethyleneimines are as follows:

Example 5a

Step 1: Ethoxylation

Tetraethylenepentamine (TEPA) (M.W. 189, 13.5 g, 0.071 moles) was placed in a nominally dry flask and dried by stirring for 0.5 h at 110°—120°C under vacuum (pressure less than 133.3 Pa 1 mm Hg)). The vacuum was released by drawing ethylene oxide (EO) from a prepurged trap connected to a supply tank. Once the flask was filled with EO, an outlet stopcock was carefully opened to a trap connected to an exhaust bubbler. After 3 h stirring at 115°—125°C, H—NMR analysis indicated the degree of ethoxylation of 1 per reactive site. The reaction mixture was cooled while being swept with argon and 0.5 g (0.0125 moles) of 60% sodium hydride in mineral oil was then added. The stirred reaction mixture was swept with argon until hydrogen evolution ceased. EO was then added to the mixture as a sweep under atmospheric pressure at 117°—135°C with moderately fast stirring. After 31 h, 459 g (10.43 moles) of EO had been added to give a calculated total degree of ethoxylation of 21.

Step 2: Quaternization

A 34.8 g (0.0052 moles) portion of the ethoxylated TEPA from step 1 which was a brown waxy solid, was dissolved in $D_2O$ to give a 50% solution. The pH of the solution was 8. The solution was heated to 60°C and methyl bromide gas swept through the reaction vessel whose exit was connected to a bubbler. Several times during the reaction, the pH became acidic and $NaHCO_3$ was added to the reaction to maintain the pH at 8. After 20 h a sweep bubbler was placed below the reaction mixture surface so that the methyl bromide was bubbled through the mixture while the stirring rate was increased. After a total of 22 h, the reaction mixture was diluted to 25% and dialized to remove salts. The reaction mixture was then freeze dried to give a pale yellowish tan crystalline solid as the quaternized ethoxylated TEPA.

Example 5b

Step 1: Ethoxylation

By a procedure similar to that of Example 3a, PEI (21.5 g, M.W. 600, 0.5 moles) was dried at 120°C under vacuum and swept with EO until hydroxyethylation was complete (3 h). The hydroxyethylated compound was cooled under argon and 0.1 g (0.0022 moles) of 50% NaH in mineral oil was added. The reaction mixture was heated to 70°C and swept for 13 h with EO until a total of 88.5 g of EO had been added which gave a calculated degree of ethoxylation of 3.4.

A 53 g (0.0173 mole) portion of this compound was placed in a similar apparatus, heated to 120°C and evacuated for 0.5 h then cooled under argon and an additional 0.5 g (0.010 moles) of 50% NaH was added. EO was swept in for 11 h until 103 g of EO had been added. This brought the total degree of ethoxylation up to 11.6.

A 74 g portion (0.0082 moles) of the 11.6 ethoxylated PEI was placed in a similar apparatus and swept with EO for 6 h at 170°C until 70 g. EO had been added to give a total degree of ethoxylation = 23.4.

Step 2: Quaternization

By a procedure similar to that of Example 3a, 20 g (0.0014 moles) of the 23.4 ethoxylated PEI from step 1 was dissolved in $D_2O$, heated to 50°—60°C and swept with methyl bromide for a total of 9 h to provide the quaternized ethoxylated PEI.

D. Diallylamine Polymers

Diallylamine polymer versions of the present invention can be prepared according to the following general scheme:

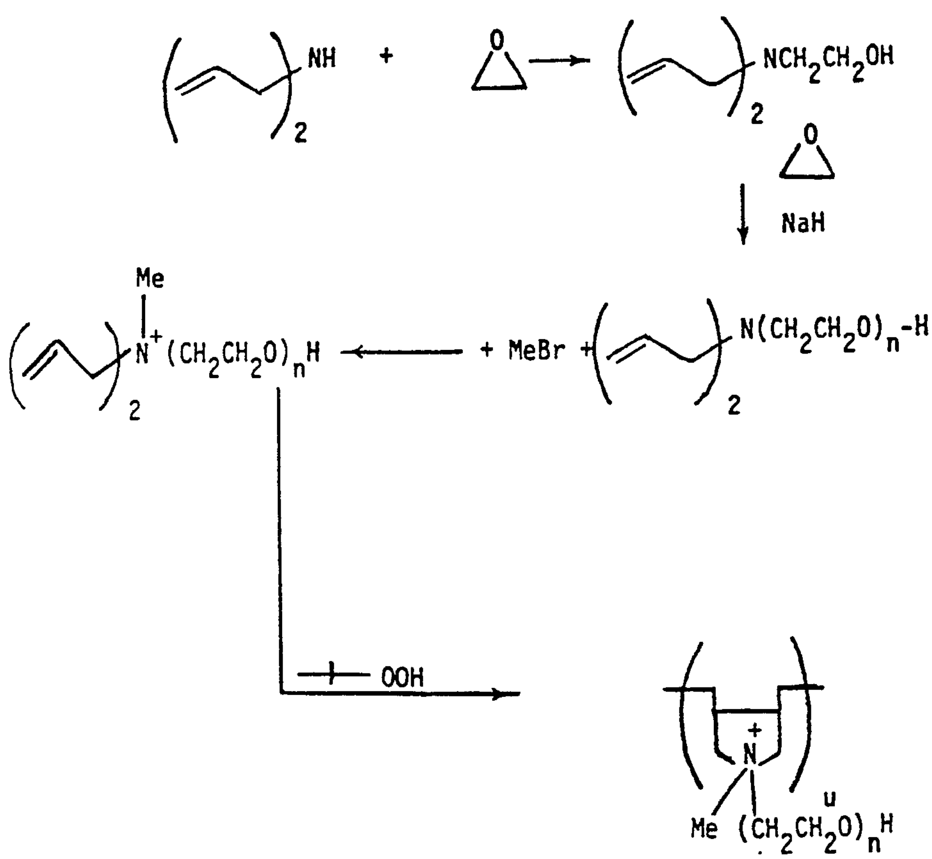

The synthesis of one such polymer is described as follows:

Example 6

Step 1: Ethoxylation

Diallylamine (1.7 moles) is dissolved in methanol (160 ml) under argon and then heated to 45°C. Ethylene oxide is then added for 2.5 hours. Methanol is then removed by heating the reaction mixture to 100°C *in vacuo*. To the residue is added sodium hydride in mineral oil (6.6 g, 0.165 moles) with stirring until the evolution of hydrogen has ceased. Ethylene oxide is then added until the degree of ethoxylation (n) is 7.

Step 2: Quaternization

The crude ethoxylated diallylamine from step 1 is dissolved in an equal volume of *1N* methanolic NaOH and then methyl bromide is added. This methyl bromide addition is continued until H—NMR analysis shows complete disappearance of the methylene hydrogens adjacent to the tertiary nitrogen. Additional portions of 1*N* methanolic NaOH are added as needed to maintain the pH of the reaction mixture at 9. The methanol is removed, yielding a damp mass. This damp mass is washed with several portions of dichloromethane. The combined washes are concentrated to yield the desired quaternized compound.

Step 3: Polymerization

The quaternized monomer from step 2 is mixed with $D_2O$ (20 ml) and heated to 95°C under argon for 1 hour. Tertbutylhydroperoxide (25 drops) is then added and the reaction continued at 90°C for 18 hours. Then 20 more drops of the hydroperoxide is added. After heating 3 more days, water is then removed *in vacuo* (50°—60°C at pressure of 133.3 Pa 0.1 mmHg)) to yield the crude polymer.

The level at which the cationic compound(s) can be present in the detergent compositions of the present invention can vary depending upon the compounds used, the particular detergent formulation (liquid, granular) and the benefits desired. These compositions can be used as laundry detergents, laundry additives, and laundry pretreatments. Generally, the cationic compounds can be included in an amount of from 0.05 to 95% by weight of the composition, with the usual range being from 0.1 to 10% by weight for laundry detergents. In terms of the benefits achieved, preferred detergent compositions can comprise from 0.5 to 5% by weight of the cationic compounds of the present invention. Typically, these preferred compositions comprise from 1 to 3% by weight of these compounds. These compounds are normally present at a level that provides from 2 ppm to 200 ppm, preferably from 10 pm to 100 ppm, of the compound in the wash solution at recommended U.S. usage levels, and normally from 30 ppm to 1000 ppm, preferably from 50 ppm to 500 ppm for European usage levels.

Detergent Surfactants

The amount of detergent surfactant included in the detergent compositions of the present invention can vary from 1 to 75% by weight of the composition depending upon the detergent surfactant(s) used, the type of composition to be formulated (e.g. granular, liquid) and the effects desired. Preferably, the detergent surfactant(s) comprises from 10 to 50% by weight of the composition. The detergent surfactant can be nonionic, anionic, ampholytic, zwitterionic, cationic, or a mixture thereof:

A. Nonionic Surfactants

Suitable nonionic surfactants for use in detergent compositions of the present invention are generally disclosed in U.S. Patent 3,929,678 to Laughlin et al., issued December 30, 1975 at column 13, line 14 through column 16, line 6. Classes of nonionic surfactants included are:

1. The polyethyleneoxide condensates of alkylphenols. These compounds include the condensation products of alkyl phenols having an alkyl group containing from 6 to 12 carbon atoms in either a straight chain or branched chain configuration with ethylene oxide, the ethylene oxide being present in an amount equal to 5 to 25 moles of ethylene oxide per mole of alkyl phenol. The alkyl substituent in such compounds can be derived, for example, from polymerized propylene or diisobutylene. Examples of compounds of this type include nonyl phenol condensed with 9.5 moles of ethylene oxide per mole of nonyl phenol; dodecylphenol condensed with 12 moles of ethylene oxide per mole of phenol; dinonyl phenol condensed with 15 moles of ethylene oxide per mole of phenol; and diisooctyl phenol condensed with 15 moles of ethylene oxide per mole of phenol. Commercially available nonionic surfactants of this type include Igepal CO—630, marked by the GAF Corporation, and Triton X—45, X—114, X—100, and X—102, all marketed by the Rohm & Haas Company.

2. The condensation products of aliphatic alcohols with from 1 to 25 moles of ethylene oxide. The alkyl chain of the aliphatic alcohol can either be straight or branched, primary or secondary, and generally contains from 8 to 22 carbon atoms. Examples of such ethoxylated alcohols include the condensation product of myristyl alcohol condensed with 10 moles of ethylene oxide per mole of alcohol; and the condensation product of 9 moles of ethylene oxide with coconut alcohol (a mixture of fatty alcohols with alkyl chains varying in length from 10 to 14 carbon atoms). Examples of commercially available nonionic surfactants of this type include Tergitol 15—S—9, marketed by Union Carbide Corporation, Neodol 45—9, Neodol 23—6.5, Neodol 45—7, and Neodol 45—4, marketed by Shell Chemical Company, and Kyro EOB, marketed by The Procter & Gamble Company.

3. The condensation products of ethylene oxide with a hydrophobic base formed by the condensation of propylene oxide with propylene glycol. The hydrophobic portion of these compounds has a molecular weight of from 1500 to 1800 and exhibits water insolubility. The addition of polyoxyethylene moieties to this hydrophobic portion tends to increase the water solubility of the molecule as a whole, and the liquid character of the product is retained up to the point where the polyoxyethylene content is 50% of the total weight of the condensation product, which corresponds to condensation with up to 40 moles of ethylene oxide. Examples of compounds of this type include certain of the commercially available Pluronic surfactants, marketed by Wyandotte Chemical Corporation.

4. The condensation products of ethylene oxide with the product resulting from the reaction of propylene oxide and ethylenediamine. The hydrophobic moiety of these products consists of the reaction product of ethylenediamine and excess propylene oxide, the moiety having a molecular weight of from 2500 to 3000. This hydrophobic moiety is condensed with ethylene oxide to the extent that the condensation product contains from 40% to 80% by weight of polyoxyethylene and has molecular weight of from 5,000 to 11,000. Examples of this type of nonionic surfactant include certain of the commercially available Tetronic compounds, marketed by Wyandotte Chemical Corporation.

5. Semi-polar nonionic detergent surfactants which include water-soluble amine oxides containing one alkyl moiety of from 10 to 18 carbon atoms and 2 moieties selected from the group consisting of alkyl groups and hydroxyalkyl groups containing from 1 to 3 carbon atoms; water-soluble phosphine oxides containing one alkyl moiety of from 10 to 18 carbon atoms and 2 moieties selected from the group consisting of alkyl groups and hydroxyalkyl groups containing from 1 to 3 carbon atoms; and water-soluble sulfoxides containing one alkyl moiety of from 10 to 18 carbon atoms and a moiety selected from the group consisting of alkyl and hydroxyalkyl moieties of from 1 to 3 carbon atoms.

Preferred semi-polar nonionic detergent surfactants are the amine oxide detergent surfactants having the formula

$$R^3(OR^4)_x\overset{\overset{O}{\uparrow}}{N}R^5_2$$

wherein $R^3$ is an alkyl, hydroxyalkyl, or alkyl phenyl group or mixtures thereof containing from 8 to 22 carbon atoms; $R^4$ is an alkylene or hydroxyalkylene group containing from 2 to 3 carbon atoms or mixtures thereof; x is from 0 to 3; and each $R^5$ is an alkyl or hydroxyalkyl group containing from 1 to 3 carbon atoms or a polyethylene oxide group containing from one to 3 ethylene oxide groups. The $R^5$ groups can be attached to each other, e.g., through an oxygen or nitrogen atom to form a ring structure.

Preferred amine oxide detergent surfactants are $C_{10}$—$C_{18}$ alkyl dimethyl amine oxide and $C_8$—$C_{12}$ alkoxy ethyl dihydroxy ethyl amine oxide.

6. Alkylpolysaccharides disclosed in EP—A—0 070 074 European Patent Application 82.200368.6), filed July 12, 1982, R.A. Llenado, having a hydrophobic group containing from 6 to 30 carbon atoms, preferably from 10 to 16 carbon atoms and a polysaccharide, e.g., a polyglycoside, hydrophilic group containing from $1\frac{1}{2}$ to 10, preferably from $1\frac{1}{2}$ to 3, most preferably from 1.6 to 2.7 saccharide units. Any reducing saccharide containing 5 or 6 carbon atoms can be used, e.g. glucose, galactose and galactosyl moieties can be substituted for the glucosyl moieties. (Optionally the hydrophobic group is attached at the 2, 3, 4 positions thus giving a glucose or galactose as opposed to a glucoside or galactoside.) The intersaccharide bonds can be, e.g., between the one position of the additional saccharide units and the 2-, 3-, 4-, and/or 6 positions on the preceding saccharide units.

Optionally, and less desirably, there can be a polyalkyleneoxide chain joining the hydrophobic moiety and the polysaccharide moiety. The preferred alkyleneoxide is ethylene oxide. Typical hydrophobic groups include alkyl groups, either saturated or unsaturated, branched or unbranched containing from 8 to 18, preferably from 10 to 16, carbon atoms. Preferably, the alkyl group is a straight chain saturated alkyl group. The alkyl group can contain up to 3 hydroxy groups and/or the polyalkyleneoxide chain can contain up to 10, preferably less than 5, most preferably 0, alkyleneoxide moieties. Suitable alkyl polysaccharides are octyl, nonyldecyl, undecyldodecyl, tridecyl, tetradecyl, pentadecyl, hexadecyl, heptadecyl, and octadecyl, di-, tri-, tetra-, penta-, and hexaglucosides, galactosides, lactosides, glucoses, fructosides, fructoses, and/or galactoses. Suitable mixtures include coconut alkyl, di-, tri-, tetra-, and pentaglucosides and tallow alkyl tetra-, penta-, and hexaglucosides.

The preferred alkylpolyglycosides have the formula

$$R^2O(C_nH_{2n}O)_t(glycosyl)_x$$

wherein $R^2$ is selected from the group consisting of alkyl, alkylphenyl, hydroxyalkyl, hydroxyalkylphenyl, and mixtures thereof in which the alkyl groups contain from 10 to 18, preferably from 12 to 14, carbon atoms; n is 2 or 3, preferably 2; t is from 0 to 10, preferably 0; and x is from $1\frac{1}{2}$ to 10, preferably from $1\frac{1}{2}$ to 3, most preferably for 1.6 to 2.7. The glycosyl is preferably derived from glucose. To prepare these compounds, the alcohol or alkylpolyethoxy alcohol is formed first and then reacted with glucose, or a

source of glucose, to form the glucoside (attachment at the 1-position). The additional glycosyl units can then be attached between their 1-position and the preceding glycosyl units 2-, 3-, 4- and/or 6-position, preferably predominately the 2-position.

7. Fatty acid amide detergent surfactants having the forula:

$$R^6-\overset{\overset{\displaystyle O}{\|}}{C}-NR^7_2$$

wherein $R^6$ is an alkyl group containing from 7 to 21 (preferably from 9 to 17) carbon atoms and each $R^7$ is selected from the group consisting of hydrogen, $C_1$—$C_4$ alkyl, $C_1$—$C_4$ hydroxyalkyl, and —$(C_2H_4O)_xH$ where x varies from 1 to 3.

Preferred amides are $C_8$—$C_{20}$ ammonia amides, monoethanolamides, diethanolamides, and isopropanol amides.

B. Anionic Surfactants

Anionic surfactants suitable in detergent compositions of the present invention are generally disclosed in U.S. Patent 3,929,678 to Laughlin et al., issued December 30, 1975 at column 23, line 58 through column 29, line 23.

Classes of anionic surfactants included are:

1. Ordinary alkali metal soaps such as the sodium, potassium, ammonium and alkylolammonium salts of higher fatty acids containing from 8 to 24 carbon atoms, preferably from 10 to 20 carbon atoms.

2. Water-soluble salts, preferably the alkali metal, ammonium and alkylolammonium salts, of organic sulfuric reaction products having in their molecular structure an alkyl group containing from 10 to 20 carbon atoms and a sulfonic acid or sulfuric acid ester group. (Included in the term "alkyl" is the alkyl portion of acyl groups.)

Examples of this group of anionic surfactants are the sodium and potassium alkyl sulfates, especially those obtained by sulfating the higher alcohols ($C_8$—$C_{18}$ carbon atoms) such as those produced by reducing the glycerides of tallow or coconut oil; and the sodium and potassium alkylbenzene sulfonates in which the alkyl group contains from 9 to 15 carbon atoms, in straight chain or branched chain configuration, e.g., those of the type described in U.S. Patents 2,220,099 and 2,477,383. Especially valuable are linear straight chain alkylbenzene sulfonates in which the average number of carbon atoms in the alkyl group is from 11 to 13, abbreviated as $C_{11}$—$C_{13}$LAS.

Preferred anionic surfactants of this type are the alkyl polyethoxylate sulfates, particularly those in which the alkyl group contains from 10 to 22, preferably from 12 to 18 carbon atoms, and wherein the polyethoxylate chain contains from 1 to 15 ethoxylate moieties preferably from 1 to 3 ethoxylate moieties. These anionic detergent surfactants are particularly desirable for formulating heavy-duty liquid laundry detergent compositions.

Other anionic surfactants of this type include sodium alkyl glyceryl ether sulfonates, especially those ethers of higher alcohols derived from tallow and coconut oil; sodium coconut oil fatty acid monoglyceride sulfonates and sulfates; sodium or potassium salts of alkyl phenol ethylene oxide ether sulfates containing from 1 to 10 units of ethylene oxide per molecule and wherein the alkyl groups contain from 8 to 12 carbon atoms; and sodium or potassium salts of alkyl ethylene oxide ether sulfates containing 1 to 10 units of ethylene oxide per molecule and wherein the alkyl group contains from 10 to 20 carbon atoms.

Also included are water-soluble salts of esters of alphasulfonated fatty acids containing from 6 to 20 carbon atoms in the fatty acid group and from 1 to 10 carbon atoms in the ester group; water-soluble salts of 2-acyloxy-alkane-1-sulfonic acids containing from 2 to 9 carbon atoms in the acyl group and from 9 to 23 carbon atoms in the alkane moiety; alkyl ether sulfates containing from 10 to 20 carbon atoms in the alkyl group and from 1 to 30 moles of ethylene oxide; water-soluble salts of olefin sulfonates containing from 12 to 24 carbon atoms; and beta-alkyloxy alkane sulfonates containing from 1 to 3 carbon atoms in the alkyl group and from 8 to 20 carbon atoms in the alkane moiety.

3. Anionic phosphate surfactants.

4. N-alkyl substituted succinamates.

C. Ampholytic Surfactants

Ampholytic surfactants can be broadly described as aliphatic derivatives of secondary or tertiary amines, or aliphatic derivatives of heterocyclic secondary and tertiary amines in which the aliphatic radical can be straight chain or branched and wherein one of the aliphatic substituents contains from 8 to 18 carbon atoms and at least one contains an anionic water-solubilizing group, e.g. carboxy, sulfonate, sulfate. See U.S. Patent 3,929,678 to Laughlin et al., issued December 30, 1975 at column 19, lines 18—35 for examples of ampholytic surfactants.

D. Zwitterionic Surfactants

Zwitterionic surfactants can be broadly described as derivatives of secondary and tertiary amines,

derivatives of heterocyclic secondary and tertiary amines, or derivatives of quaternary ammonium, quaternary phosphonium or tertiary sulfonium compounds. See U.S. Patent 3,929,678 to Laughlin et al., issued December 30, 1975 at column 19, line 38 through column 22, line 48 for examples of zwitterionic surfactants.

E. Cationic Surfactants

Cationic surfactants can also be included in detergent compositions of the present invention. Suitable cationic surfactants include the quaternary ammonium surfactants having the formula:

$$[R^2(OR^3)_y][R^4(OR^3)_y]_2R^5N^+X^-$$

wherein $R^2$ is an alkyl or alkyl benzyl group having from 8 to 18 carbon atoms in the alkyl chain; each $R^3$ is selected from the group consisting of $-CH_2CH_2-$, $-CH_2CH(CH_3)-$, $-CH_2CH(CH_2OH)-$, $-CH_2CH_2CH_2-$, and mixtures thereof; each $R^4$ is selected from the group consisting of $C_1$—$C_4$ alkyl, $C_1$—$C_4$ hydroxyalkyl, benzyl, ring structures formed by joining the two $R^4$ groups, $-CH_2CHOHCHOHCOR^6CHOHCH_2OH$ wherein $R^6$ is any hexose or hexose polymer having a molecular weight less than 1000, and hydrogen when y is not 0; $R^5$ is the same as $R^4$ or is an alkyl chain wherein the total number of carbon atoms of $R^2$ plus $R^5$ is not more than 18; each y is from 0 to 10 and the sum of the y values is from 0 to 15; and X is any compatible anion.

Preferred of the above are the alkyl quaternary ammonium surfactants, especially the mono-long chain alkyl surfactants described in the above formula when $R^5$ is selected from the same groups as $R^4$. The most preferred quaternary ammonium surfactants are the chloride, bromide and methylsulfate $C_8$—$C_{16}$ alkyltrimethylammonium salts, $C_8$—$C_{16}$ alkyl di(hydroxyethyl)methylammonium salts, the $C_8$—$C_{16}$ alkyl hydroxyethyldimethylammonium salts, and $C_8$—$C_{16}$ alkyloxypropyl trimethylammonium salts. Of the above, decyl trimethylammonium methylsulfate, lauryl trimethylammonium chloride, myrystyl trimethylammonium bromide and coconut trimethylammonium chloride and methylsulfates are particularly preferred.

Detergent Builders

Detergent compositions of the present invention can optionally comprise inorganic or organic detergent builders to assist in mineral hardness control. These builders can comprise from 0 to 80% by weight of the composition. When included, these builders typically comprise up to 60% by weight of the detergent composition. Built liquid formulations preferably comprise from 10 to 25% detergent builder while built granular formulations preferably comprise from 10 to 50% by weight detergent builder.

Suitable detergent builders include crystalline aluminosilicate ion exchange materials having the formula:

$$Na_z(AlO_2)_z \cdot (SiO_2)_y \cdot xH_2O$$

wherein z and y are at least 6, the mole ratio of z to y is from 1.0 to 0.5; and x is from 10 to 264. Amorphous hydrated aluminosilicate materials useful herein have the empirical formula

$$M_z(zAlO_2 \cdot ySiO_2)$$

wherein M is sodium, potassium, ammonium or substituted ammonium, z is from 0.5 to 2; and y is 1; this material having a magnesium ion exchange capacity of at least 50 milligram equivalents of $CaCO_3$ hardness per gram of anhydrous aluminosilicate.

The aluminosilicate ion exchange builder materials are in hydrated form and contains from 10% to 28% of water by weight if crystalline, and potentially even higher amounts of water if amorphous. Highly preferred crystalline aluminosilicate ion exchange materials contain from 18% to 22% water in their crystal matrix. The preferred crystalline aluminosilicate ion exchange materials are further characterized by a particle size diameter of from 0.1 µm to 10 µm. Amorphous materials are often smaller, e.g., down to less than 0.01 µm. More preferred ion exchange materials have a particle size diameter of from 0.2 µm to 4 µm. The term "particle size diameter" represents the average particle size diameter of a given ion exchange material as determined by conventional analytical techniques such as, for example, microscopic determination utilizing a scanning electron microscope. The crystalline aluminosilicate ion exchange materials are usually further characterized by their calcium ion exchange capacity, which is at least 200 mg equivalent of $CaCO_3$ water hardness/g of aluminosilicate, calculated on an anhydrous basis, and which generally is in the range of from 300 mg eq./g to 352 mg eq./g. The aluminosilicate ion exchange materials are still further characterized by their calcium ion exchange rate which is at least 2 grains $Ca^{++}$/3.785 l (gallon)/minute/gram/3.785 l (gallon) of aluminosilicate (anhydrous basis), and generally lies within the range of from 2 grains/3.785 l (gallon)/minute/gram/3.785 l (gallon) to 6 grains/3.785 l (gallon)/minute/gram/3.785 l (gallon), based on calcium ion hardness. Optimum aluminosilicates for builder purposes exhibit a calcium ion exchange rate of at least 4 grains/3.785 l (gallon)/minute/gram/3.785 l (gallon).

The amorphous aluminosilicate ion exchange materials usually have a $Mg^{++}$ exchange capacity of at least 50 mg eq. $CaCO_3$/g (12 mg. $Mg^{++}$/g) and a $Mg^{++}$ exchange rate of at least about 1 grain/3.785 l (gallon)/minute/gram/3.785 l (gallon). Amorphous materials do not exhibit an observable diffraction pattern when examined by Cu radiation 0.154 nm (1.54 Angstrom Units).

Useful aluminosilicate ion exchange materials are commercially available. These aluminosilicates can be crystalline or amorphous in structure and can be naturally-occurring aluminosilicates or synthetically derived. A method for producing aluminosilicate ion exchange materials is disclosed in U.S. Patent 3,985,669 to Krummel, et. al. issued October 12, 1976. Preferred synthetic crystalline aluminosilicate ion exchange materials useful herein are available under the designations Zeolite A, Zeolite P (B), and Zeolite X. In an especially preferred embodiment, the crystalline aluminosilicate ion exchange material has the formula

$$Na_{12}[(AlO_2)_{12}(SiO_2)_{12}]\cdot xH_2O$$

wherein x is from 20 to 30, especially 27.

Other examples of detergency builders include the various water-soluble, alkali metal, ammonium or substituted ammonium phosphates, polyphosphates, phosphonates, polyphosphonates, carbonates, silicates, borates, polyhydroxysulfonates, polyacetates, carboxylates, and polycarboxylates. Preferred are the alkali metal, especially sodium, salts of the above.

Specific examples of inorganic phosphate builders are sodium and potassium tripolyphosphate, pyrophosphate, polymeric metaphate having a degree of polymerization of from 6 to 21, and orthophosphate. Examples of polyphosphonate builders are the sodium and potassium salts of ethylene-1,1-diphosphonic acid, the sodium and potassium salts of ethane 1-hydroxy-1,1-diphosphonic acid and the sodium and potassium salts of ethane, 1,1,2-triphosphonic acid. Other phosphorus builder compounds are disclosed in U.S. Patents 3,159,581; 3,213,030; 3,422,021; 3,422,137; 3,400,176 and 3,400,148.

Examples of nonphosphorus, inorganic builders are sodium and potassium carbonate, bicarbonate, sesquicarbonate, tetraborate decahydrate, and silicate having a mole ratio of $SiO_2$ to alkali metal oxide of from 0.5 to 4.0, preferably from 1.0 to 2.4.

Useful water-soluble, nonphosphorus organic builders include the various alkali metal, ammonium and substituted ammonium polyacetates, carboxylates, polycarboxylates and polyhydroxysulfonates. Examples of polyacetate and polycarboxylate builders are the sodium, potassium lithium, ammonium and substituted ammonium salts of ethylenediamine tetraacetic acid, nitrilotriacetic acid, oxydisuccinic acid, mellitic acid, benzene polycarboxylic acids, and citric acid.

Highly preferred polycarboxylate builders are disclosed in U.S. Patent No. 3,308,067 to Diehl, issued March 7, 1967. Such materials include the water-soluble salts of homo- and copolymers of aliphatic carboxylic acids such as maleic acid, itaconic acid, mesaconic acid, fumaric acid, aconitric acid, citraconic acid and methylenemalonic acid.

Other builders include the carboxylated carbohydrates disclosed in U.'S. Patent 3,723,322 to Diehl issued March 28, 1973.

Other useful builders are sodium and potassium carboxymethyloxymalonate, carboxymethyloxysuccinate, cis-cyclohexenehexacarboxylate, cis-cyclopentanetetracarboxylate phloroglucinol trisulfonate, water-soluble polyacrylates (having molecular weights of from 2,000 to 200,000 for example), and the copolymers of maleic anhydride with vinyl methyl ether or ethylene.

Other suitable polycarboxylates are the polyacetal carboxylates disclosed in U.S. Patent 4,144,226, to Crutchfield et al. issued March 13, 1979, and U.S. Patent 4,246,495, to Crutchfield et al., issued March 27, 1979. These polyacetal carboxylates can be prepared by bringing together under polymerization conditions an ester of glyoxylic acid and a polymerization initiator. The resulting polyacetal carboxylate ester is then attached to chemically stable end groups to stabilize the polyacetal carboxylate against rapid depolymerization in alkaline solution, converted to the corresponding salt, and added to a surfactant.

Other useful detergency builder materials are the "seeded builder" compositions disclosed in Belgian Patent No. 798,856, issued October 29, 1973. Specific examples of such seeded builder mixtures are: 3:1 wt. mixtures of sodium carbonate and calcium carbonate having 5 µm particle diameter; 2.7:1 wt. mixtures of sodium sesquicarbonate and calcium carbonate having a particle diameter of 0.5 µm; 20:1 wt. mixtures of sodium sesquicarbonate and calcium hydroxide having a particle diameter of 0.01 µm; and a 3:3:1 wt. mixture of sodium carbonate, sodium aluminate and calcium oxide having a particle diameter of 5 µm.

## Other Optional Detergent Ingredients

Other optional ingredients which can be included in detergent compositions of the present invention, in their conventional art-established levels for use (i.e., from 0 to 20%), include solvents, bleaching agents, bleach activators, soil-suspending agents, corrosion inhibitors, dyes, fillers, optical brighteners, germicides, pH adjusting agents (monoethanolamine, sodium carbonate, sodium hydroxide), enzymes, enzyme-stabilizing agents, perfumes, fabric softening components or static control agents.

Detergent Formulations

Granular formulations embodying the detergent compositions of the present invention can be formed by conventional techniques, i.e. by slurrying the individual components in water and then atomizing and spray-drying the resultant mixture, or by pan or drum granulation of the ingredients. Granular formulations preferably comprise from 10 to 30% detergent surfactant, usually anionic.

Liquid formulations embodying the detergent compositions can be built or unbuilt. If unbuilt, these compositions conventionally contain 15 to 50% total surfactant, from 0 to 10% of an organic base such as a mono-, di-, or tri-alkanol amine, a neutralization system such as an alkali metal hydroxide and a lower primary alcohol such as ethanol or isopropanol, and 20 to 80% water. Such compositions are normally homogeneous single phase liquids of low viscosity (100 to 150 mPa·s at 23.9°C (centipoise at 75°F)).

Built liquid detergent compositions can be in the form of single phase liquids provided that the builder is solubilized in the mixture at its level of use. Such liquids conventionally contain 10 to 25% total surfactant, 10 to 25% builder which can be organic or inorganic, 3 to 10% of a hydrotrope system and 40 to 77% water. Liquids of this type also have a low viscosity (100 to 150 mPa·s at 23°C (centipoise at 75·F)). Built liquid detergents incorporating components that form heterogeneous mixtures (or levels of builder that cannot be completely dissolved) can also comprise detergent compositions of the present invention. Such liquids conventionally employ viscosity modifiers to produce systems having plastic shear characteristics to maintain stable dispersions and to prevent phase separation or solid settlement.

Near Neutral Wash pH Detergent Formulations

While the detergent compositions of the present invention are operative within a wide range of wash pHs (e.g. from 5 to 12), they are particularly suitable when formulated to provide a near neutral wash pH, i.e. an initial pH of from 6.0 to 8.5 at a concentration of from 0.1 to 2% by weight in water at 20°C. Near neutral wash pH formulations are better for enzyme stability and for preventing stains from setting. In such formulations, the wash pH is preferably from 7.0 to 8.5, and more preferably from 7.5 to 8.0.

Preferred near neutral wash pH detergent formulations are disclosed in EP—A—0 095 205 (European Patent Application 83.200688.6), filed May 16, 1983, J.H.M. Wertz and P.C.E. Goffinet. These preferred formulations comprise:

(a) from 2 to 60% (preferably from 10 to 25%) by weight of an anionic synthetic surfactant as previously defined;

(b) from 0.25 to 12% (preferably from 1 to 4%) by weight of a cosurfactant selected from the group consisting of:

(i) quaternary ammonium surfactants having the formula:

$$[R^2(OR^3)_y][R^4(OR^3)_y]_2R^5N^+X^-$$

wherein $R^2$, each $R^3$, $R^4$, $R^5$, X and y are as previously defined;

(ii) diquaternary ammonium surfactants having the formula:

$$[R^2(OR^3)_y][R^4(OR^3)_y]_2N^+R^3N^+R^5[R^4(OR^3)_y]_2\ (X^=)_2$$

wherein $R^2$, $R^3$, $R^4$, y and X are as defined above; particularly preferred are the $C_8$—$C_{16}$ alkyl pentamethylethylenediamine chloride, bromide and methylsulfate salts;

(iii) amine surfactants having the formula:

$$[R^2(OR^3)_y][R^4(OR^3)_y]R^5N$$

wherein $R^2$, $R^3$, $R^4$, $R^5$ and y are as defined above; particularly preferred are the $C_{12}$—$C_{16}$ alkyl dimethyl amines;

(iv) diamine surfactants having the formula:

$$[R^2(OR^3)_y][R^4(OR^3)_y]NR^3NR^5[R^4(OR^3)_y]$$

wherein $R^2$, $R^3$, $R^4$, $R^5$ and y are as defined above; particularly preferred are the $C_{12}$—$C_{16}$ alkyl dimethyl diamines;

(v) amine oxide surfactants having the formula

$$[R^2(OR^3)_y][R^4(OR^3)_y]R^5N\rightarrow O$$

wherein $R^2$, $R^3$, $R^4$, $R^5$ and y are as defined above; particularly preferred are the $C_{12}$—$C_{16}$ alkyldimethyl amine oxides; and

(vi) di(amine oxide) surfactants having the formula:

$$[R^2(OR^3)_y][R^4(OR^3)_y]\underset{\downarrow\atop O}{N}R^3\,\underset{\downarrow\atop O}{N}R^5[R^4(OR^3)_y]$$

wherein $R^2$, $R^3$, $R^4$, $R^5$ and y are as defined above; preferred are the $C_{12}$—$C_{16}$ alkyl trimethylethylene di(amine oxides) and

(c) from 5% to 40% by weight (preferably 7 to 30% by weight, and most preferably from 10 to 20% by weight) of a fatty acid containing from 10 to 22 carbon atoms (preferably a $C_{10}$—$C_{14}$ saturated fatty acid or mixture thereof); the mole ratio of the anionic surfactant to the cosurfactant being at least 1 and preferably from 2:1 to 20:1.

Such compositions also preferably contain from 3 to 15% by weight of an ethoxylated alcohol or ethoxylated alkyl phenol (nonionic surfactants) as previously defined. Highly preferred compositions of this type also preferably contain from 2 to 10% by weight of citric acid and minor amounts (e.g., less than 20% by weight) of neutralizing agents, buffering agents, phase regulants, hydrotropes, enzymes, enzyme stabilizing agents, polyacids, suds regulants, opacifiers, antioxidants, bactericides, dyes, perfumes and brighteners, such as those described in U.S. Patent 4,285,841 to Barrat et al., issued August 25, 1981.

Specific Embodiments of Detergent Compositions According to the Present Invention

The following embodiments illustrate, but are not limiting of, detergent compositions of the present invention:

A granular detergent composition is as follows:

| Component | Wt. % |
|---|---|
| Polyurethane of Example 3 | 1.0 |
| Sodium $C_{14}$—$C_{15}$ alkylethoxysulfate | 10.7 |
| $C_{13}$ linear alkyl benzene sulfonic acid | 4.3 |
| $C_{12}$—$C_{14}$ alkylpolyethoxylate (6) | 0.5 |
| Sodium toluene sulfonate | 1.0 |
| Sodium tripolyphosphate | 32.9 |
| Sodium carbonate | 20.3 |
| Sodium silicate | 5.8 |
| Minors and water | Balance to 100 |

The components are added together with continuous mixing to form an aqueous slurry which is then spray dried to form the composition. Instead of the polyurethane, the compounds of Examples 1 or 2, the random copolymer of Example 4, the PEA of Example 5a, the PEI of Example 5b or the diallylamine polymer of Example 6 can be substituted therefor.

Embodiment II

A liquid detergent composition is as follows:

| Component | Wt. % |
|---|---|
| Random copolymer of Example 4 | 1.0 |
| Sodium $C_{14}$—$C_{15}$ alkyl polyethoxy (2.5) sulfate | 8.3 |
| $C_{12}$—$C_{14}$ alkyl dimethyl amine oxide | 3.3 |
| Sodium toluene sulfonate | 5.0 |
| Monoethanolamine | 2.3 |
| Sodium nitrilotriacetate | 18.2 |
| Minors and water | Balance to 100 |

The components are added together with continuous mixing to form the composition. Instead of the random copolymer, the polyurethane of Example 3, the PEA of Example 5a, the PEI of Example 5b or the diallylamine polymer of Example 6 can be substituted therefor.

Embodiments III and IV

Liquid detergent compositions are as follows:

| Component | Wt. % | |
|---|---|---|
| | III | IV |
| Quat HMDA of Example 2a | 1.5 | 1.5 |
| $C_{14}$—$C_{15}$ alkylethoxysulfuric acid | 10.8 | — |
| $C_{14}$—$C_{15}$ alkylpolyethoxy (2.25) sulfuric acid | — | 10.8 |
| $C_{13}$ linear alkylbenzene sulfonic acid | 7.2 | 7.2 |
| $C_{12}$ alkyl trimethylammonium chloride | 1.2 | 1.2 |
| $C_{12-13}$ alcohol polyethoxylate (6.5) | 6.5 | 6.5 |
| Coconut fatty acid | 15.0 | 15.0 |
| Citric acid monohydrate | 6.9 | 4.0 |
| Diethylenetriamine pentaacetic acid | 0.9 | 0.9 |
| Protease enzyme | 0.8 | 0.8 |
| Amylase enzyme | 0.3 | 0.3 |
| Monoethanolamine | 13.6 | 2.0 |
| Triethanolamine | 3.0 | 4.0 |
| Sodium hydroxide | — | 2.0 |
| Potassium hydroxide | — | 2.8 |
| 1,2-Propanediol | 5.0 | 5.0 |
| Ethanol | 3.0 | 7.0 |
| Sodium formate | 1.0 | 1.0 |
| Sodium toluene sulfonate | 5.0 | — |
| Minors and water | Balance to 100 | |

Embodiment IV is prepared by adding the components together with continuous mixing, in the following order to produce a clear liquid: a paste premix of the alkylbenzene sulfonic acid, 0.9 parts of the sodium hydroxide, propylene glycol, and 2.3 parts of the ethanol; a paste premix of the alkylpolyethoxysulfuric acid, 1.1 parts of the sodium hydroxide and 3.1 parts of the ethanol; alcohol polyethoxylate; premix of monoethanolamine, triethanolamine and brighteners, 1.5 parts potassium hydroxide; balance of the ethanol; citric acid; formate; 1.4 parts potassium hydroxide; fatty acid; pentaacetic acid; alkyl trimethylammonium chloride; adjust pH to 8.4 with potassium hydroxide, water or citric acid; enzymes; Quat HMDA (50% aqueous solution); and perfume. Embodiment III can be prepared in a similar manner. Instead of the PEA, the polyurethane of Example 3, the random copolymer of Example 4, the PEI of Examble 5b or the diallylamine polymer of Example 6 can be substituted therefor.

Embodiment V

A liquid detergent composition is as follows:

| Component | Wt. % |
|---|---|
| PEA of Example 5a | 1.0 |
| Sodium $C_{12}$ alkylpolyethoxy (3) sulfate | 12.0 |
| $C_{12}$—$C_{13}$ alcohol polyethoxylate (6.5) | 23.4 |
| Monoethanolamine | 2.0 |
| Ethanol | 9.0 |
| Citric acid monohydrate | 0.8 |
| Minors and water | Balance to 100 |

The components are added together with continuous mixing to form the composition. Instead of the PEA, the compounds of Example 1 or 2, the polyurethane of Example 3, the random copolymer of Example 4, the PEI of Example 5b or the diallylamine polymer of Example 6 can be substituted therefor.

Clay Soil Removal/Anti-Redeposition Properties of Various Ethoxylated Quaternized Amines

A. Experimental Method

1. Clay Soil Removal

Clay soil removal comparison were conducted in a standard 1 liter Tergotometer employing water of 7 grain hardness (3:1 $Ca^{++}$:$Mg^{++}$) and a temperature of 37.8°C of (100°F). Soiled swatches were washed in the Tergotometer for 10 minutes and rinsed twice with water (7 grain hardness) at 23.9°C (70°F) for 2 minutes.

65% polyester/35% cotton blend fabric was used for the swatches. The swatches were 12.7 cm by 12.7 cm (5 inches by 5 inches) in size and were soiled by dipping in an aqueous slurry of local clay and subsequently baked to remove the water. The dipping and baking was repeated 5 times.

One wash employed 2000 ppm of a control liquid detergent composition containing the following surfactants:

| Surfactant | Amount (%) |
|---|---|
| Sodium $C_{14}$—$C_{15}$ alkyl ethoxysulfate | 10.8 |
| $C_{13}$ linear alkylbenzene sulfonic acid | 7.2 |
| $C_{12}$—$C_{13}$ alcohol polyethoxylate (6.5) | 6.5 |
| $C_{12}$ alkyl trimethylammonium chloride | 1.2 |

A second wash used the same detergent composition but also containing an ethoxylated quaternized amine at 20 ppm. Neither composition contained optical brighteners. The product washes approximated a conventional home use laundry situation. After laundering, the swatches were dried in a mini-dryer.

The swatches were graded before and after washing on a Gardner Whiteness meter reading the L, a, and b coordinates. Whiteness (W) was calculated as:

$$W = \frac{7L^2 - 40LB}{700}$$

The clay soil removal performance of each detergent composition was determined by finding the difference in whiteness ($\triangle W$) before and after washing as:

$$\triangle W = W_{after} - W_{before}$$

The improvement in clay soil removal performance of the composition containing the ethoxylated quaternized amine was measured as the difference in W values ($\triangle^2 W$) relative to the control composition.

2. Anti-Redeposition

Anti-redeposition comparisons were conducted in a 5 pot Automatic Miniwasher (AMW) employing 7 grain hardness water and temperature 29.4°C (95°F). Test swatches were washed for 10 minutes and rinsed twice with water (7 grain hardness) at 23.9°C (75°F) for 2 minutes.

After the AMW pots were filled with 6 liters of water each, the detergent composition to be tested (control or containing 20 ppm ethoxylated quaternized amine as in clay soil removal test) was added and agitated for 2 minutes. A background soil mixture (200 ppm artificial body soil, 100 ppm vacuum cleaner soil and 200 ppm clay soil) was then added and agitated for an additional 3 minutes. Three 12.7 cm (5 inch) square test swatches (50% polyester/50% cotton T-shirt material) were then added, along with two 80% cotton/20% polyester terry clothes and two 27.9 cm (11 inch) square swatches of 100% polyester knit fabric. The 10 minute wash cycle commenced at this point.

Following the rinse cycle, the test swatches were dried in a mini-dryer. Gardner Whiteness meter readings (L, a and b) were then determined for the three test swatches. Anti-redeposition performance (ARD) was then calculated according to the following equation.

$$ARD = \frac{7L^2 - 40Lb}{700}$$

The ARD values for the three test swatches were then averaged. The improvement in anti-redeposition performance of the composition containing the ethoxylated quaternized amine was measured as the difference in ARD values (△ ARD) relative to the control composition.

B. Test Results

The results from testing the clay-soil removal and anti-redeposition performance of various ethoxylated quaternized amines is shown in the following Table:

| Amine * Type | Amine M.W. | Degree of Ethoxylation | Quat ** Group | $\Delta^2W$ | △ARD |
|---|---|---|---|---|---|
| EDA | 60 | 12 | $C_1$ | 8.3 | - |
| | | 24 | | 9.5 | - |
| | | 42 | | 9.1 | - |
| PDA | 74 | 24 | $C_1$ | 8.5 | 19.4 |
| HMDA | 100 | 3 | $C_1$ | 1.2 | - |
| | | 6 | | 4.6 | 17.7 |
| | | 12 | | 5.0 | - |
| | | 24 | | 9.4 | 19.8 |
| | | 35 | | 6.7 | 16.8 |
| | | 24 | $C_4$ | 8.7 | - |
| | | 24 | $C_8$ | 7.3 | - |
| | | 24 | Bz | 6.8 | - |
| PMDA | | 9 | $C_1$ | - | 16.8 |
| PEA | 103 | 3 | $C_1$ | 2.0 | 12.2 |
| | | 6 | | 6.3 | 16.4 |
| | | 12 | | 8.5 | 17.7 |
| | | 24 | | 7.6 | 16.4 |
| | | 36 | | 9.5 | - |
| PEA | 189 | 18 | $C_1$ | 3.9 | - |
| | | 22 | | 6.0 | 18.3 |
| PEA | 309 | 24 | $C_1$ | 4.4 | 17.0 |

*EDA = ethylenediamine, PDA = propylenediamine, HMDA = hexamethylenediamine, PMDA = 1,3-bis-(N-morphilino)-propane, PEA = polyethyleneamine.

**$C_1$ = methyl, $C_4$ = butyl, Bz = benzyl.

For comparison, PEG 6000 (polyethylene glycol having M.W. of 6000) has a $\Delta^2W$ value of 4.9 and a $\Delta$ARD value of 8.9.

## Claims

1. A water-soluble cationic compound having clay soil removal/anti-redeposition properties selected from the group consisting of:

(1) ethoxylated cationic monoamines having the formula:

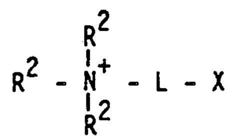

(2) ethoxylated cationic diamines having the formula:

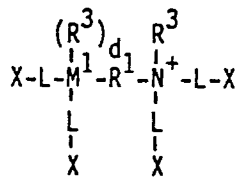

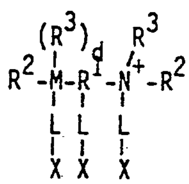

or

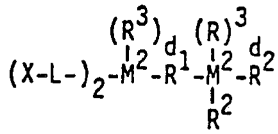

wherein $M^1$ is an $N^+$ or N group; each $M^2$ is an $N^+$ or N group, and at least one $M^2$ is an $N^+$ group;

(3) ethoxylated cationic polyamines having the formula:

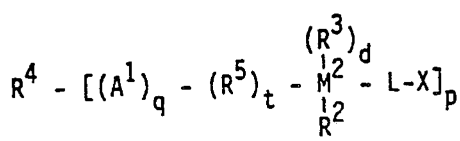

(4) ethoxylated cationic polymers which comprise a polymer backbone, at least 2 M groups and at least one L—X group, wherein M is a cationic group attached to or integral with the backbone and contains at $N^+$ positively charged center; and L connects groups M and X or connects group X to the polymer backbone; and

(5) mixtures thereof; wherein $A^1$ is

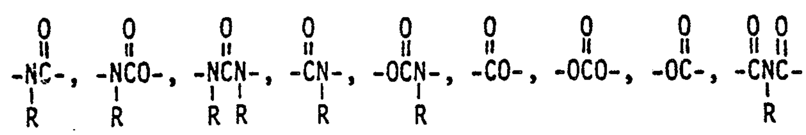 or -O-;

R is H or $C_1$—$C_4$ or hydroxyalkyl; $R^1$ is $C_2$—$C_{12}$ alkylene, hydroxyalkylene, alkenylene arylene or alkarylene, or a $C_2$—$C_3$ oxyalkylene moiety having from 2 to 20 oxyalkylene units provided that no O—N bonds are formed; each $R^2$ is $C_1$—$C_4$ alkyl or hydroxyalkyl, the moiety —L—X, or two $R^2$ together form the moiety $—(CH_2)_r—A^2—(CH_2)_s—$, wherein $A^2$ is —O— or $—CH_2—$, r is 1 or 2, s is 1 or 2 and r + s is 3 or 4; each $R^3$ is $C_1$—$C_8$ alkyl or hydroxyalkyl, benzyl, the moiety —L—X, or two $R^3$ or one $R^2$ and $R^3$ together form the moiety $—(CH_2)_r—A^2—(CH_2)_s$; $R^4$ is a substituted $C_3$—$C_{12}$ alkyl, hydroxyalkyl, alkenyl, aryl or alkaryl group having p substitution sites; $R^5$ is $C_1$—$C_{12}$ alkylene, hydroxyalkylene, alkenylene, arylene or alkarylene, or a $C_2$—$C_3$ oxyalakylene moiety having from 2 to 20 oxyalkylene units provided that no O—O or O—N bonds are formed; X is a nonionic group selected from the group consisting of H, $C_1$—$C_4$ alkyl or hydroxyalkyl ester or ether groups, and mixtures thereof; L is a hydrophilic chain which contains the polyoxyalkylene moiety $—[(R^6O)_m(CH_2CH_2O)_n]—$, wherein $R^6$ is $C_3$—$C_4$ alkylene or hydroxyalkylene and m and n are numbers such that the moiety $—(CH_2CH_2O)_n—$ comprises at least 50% by weight of said polyoxyalkylene moiety; d is 1 when $M^2$ is $N^+$ and is O when $M^2$ is N; n is at least 12 for said cationic monoamines, is at least 6 for said cationic diamines, and is at least 3 for said cationic polyamines and cationic polymers; p is from 3 to 8; q is 1 or 0; t is 1 or 0, provided that t is 1 when q is 1.

2. The compound of Claim 1 characterized in that said cationic compound is an ethoxylated cationic monoamine.

3. The compound of Claim 2 characterized in that one $R^2$ is methyl and two $R^2$ are the moiety L—X.

4. The compound of Claim 3 characterized in that m is 0 and n is at least 15.

5. The compound of Claim 1 characterized in that said cationic compound is an ethoxylated cationic diamine.

6. The compound of Claim 5 characterized in that $R^1$ is $C_2$—$C_6$ alkylene.

7. The compound of Claim 6 characterized in that $R^1$ is hexamethylene.

8. The compound of Claim 1 characterized in that said cationic compound is an ethoxylated cationic polyamine.

9. The compound of Claim 8 characterized in that $R^4$ is a substituted $C_3$—$C_6$ alkyl, hydroxyalkyl or aryl group; $A^1$ is

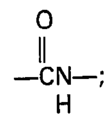

p is from 3 to 6.

10. The compound of any of Claims 5—9 characterized in that each $R^2$ is methyl or the moiety —L—X and each $R^3$ is methyl.

11. The compound of any of Claims 5—10 characterized in that $M^1$ and each $M^2$ are an $N^+$ group.

12. The compound of Claim 1 characterized in that said cationic compound is an ethoxylated cationic polymer.

13. The compound of claim 12 characterized in that said backbone is selected from the group consisting of the polyurethanes, the polyesters, the polyethers, the polyamides, the polyimides, the polyacrylates, the polyacrylamides, the polyvinylethers, the polyalkylenes, the polyalkarylenes, the polyalkyleneimines, the polyvinylamines, the polyallylamines, the polydiallylamines, the polyvinylpyridines, the polyaminotriazoles, polyvinyl alcohol, the aminopolyureylenes and mixtures thereof.

14. The compound of any of Claims 12—13 characterized in that the ratio of groups M to groups X is from 2:1 to 1:10.

15. The compound of any of Claims 12—14 characterized in that units of the polymer containing groups M and L—X comprise from 50 to 100% of the polymer.

16. The compound of any of Claims 12—15 characterized in that the number of groups M and L—X are each from 3 to 40.

17. The compound of any of claims 5—16 characterized in that m and n are numbers such that the moiety $—(CH_2CH_2O)_n—$ comprises at least 85% by weight of said polyoxyalkylene moiety.

18. The compound of any of Claims 5—17 characterized in that m is 0 and n is at least 12.

19. The compound of any of Claims 5—18 characterized in that X is H or methyl ether.

20. The compound of Claim 12 characterized in that said polymer comprises units selected from those having formulas I, II and III:

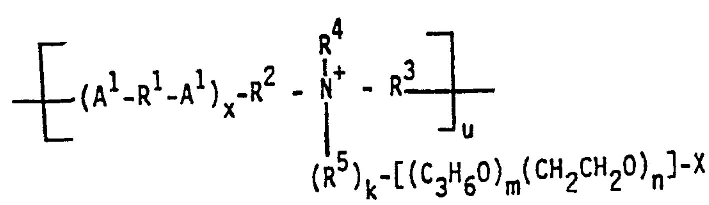

I

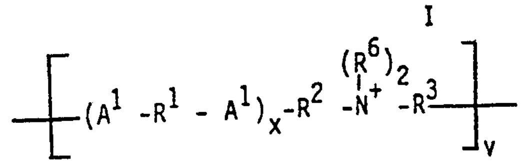

II

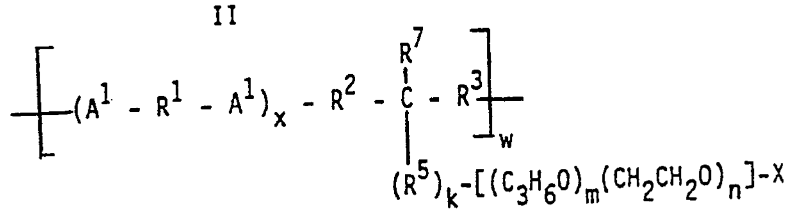

III

wherein $A^1$ is

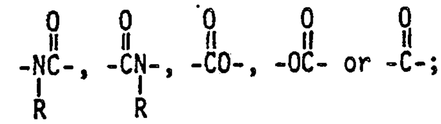

x is 0 or 1; R is H or $C_1$—$C_4$ alkyl or hydroxyalkyl; $R^1$ is $C_2$—$C_{12}$ alkylene, hydroxyalkylene, alkenylene, cycloalkylene, arylene or alkarylene, or a $C_2$—$C_3$ oxyalkylene moiety having from 2 to 20 oxyalkylene units provided that no O—O or O—N bonds are formed with $A^1$; when x is 1, $R^2$ is —$R^5$— except when $A^1$ is

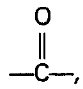

or is —$(OR^8)_y$— or —$OR^5$— provided that no O—O or N—O bonds are formed with $A^1$, and $R^3$ is —$R^5$— except when $A^1$ is

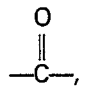

or is —$(R^8O)$—$_y$ or —$R^5O$— provided that no O—O or O—N bonds are formed with $A^1$; when x is O, $R^2$ is

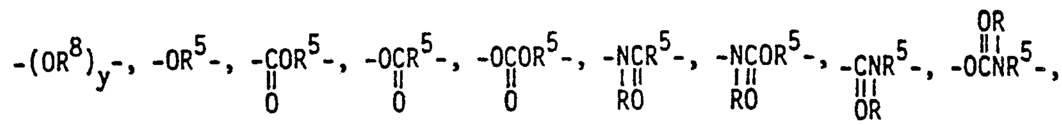

and $R^3$ is —$R^5$—; $R^4$ is $C_1$—$C_4$ alkyl or hydroxyalkyl, or the moiety —$(R^5)_k$—$[(C_3H_6O)_m(CH_2CH_2O)_n]$—X; $R^5$ is $C_1$—$C_{12}$ alkylene, hydroxyalkylene, alkenylene, arylene, or alkarylene; each $R^6$ is $C_1$—$C_4$ alkyl or hydroxyalkyl, or the moiety —$(CH_2)_r$—$A^2$—$(CH_2)_s$—, wherein $A^2$ is —O— or —$CH_2$—; $R^7$ is H or $R^4$; $R^8$ is $C_2$—$C_3$ alkylene or hydroxyalkylene; X is H,

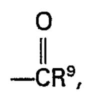

—$R^9$ or a mixture thereof, wherein $R^9$ is $C_1$—$C_4$ alkyl or hydroxyalkyl; k is 0 or 1; m and n are numbers such that the moiety —$(CH_2CH_2O)_n$— comprises at least 85% by weight of the moiety —$[C_3H_6O)_m(CH_2CH_2O)_n]$—; m is from 0 to 5; n is at least 3; r is 1 or 2, s is 1 or 2, and r + s is 3 or 4; y is from 2 to 20; the number of u, v and w are such that there are at least 2 $N^+$ centers and at least 2 X groups.

21. The compound of Claim 20 characterized in that $A^1$ is

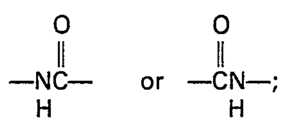

$R^1$ is $C_2$—$C_6$ alkylene, $R^2$ is —$OR^5$— or —$(OR^8)_y$—; $R^3$ —$R^5O$— or —$(R^8O)_y$—; $R^4$ and $R^6$ are each methyl; $R^5$ is $C_2$—$C_3$ alkylene; $R^7$ is H or methyl; $R^8$ is ethylene; X is H or methyl; k is 0; y is from 2 to 12.

22. The compound of Claim 12 characterized in that said polymer comrpises units selected from those having formulas IV, V and VI:

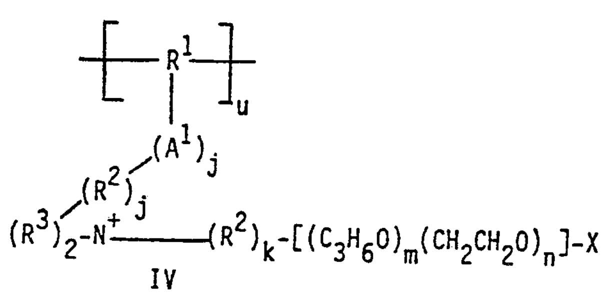

IV

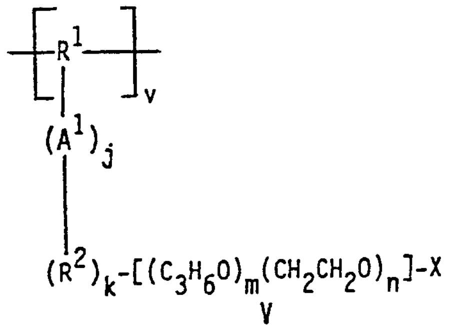
V

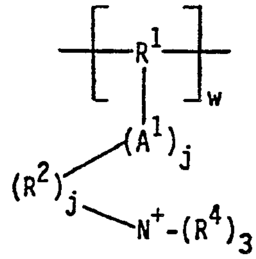
VI

wherein $A^1$ is

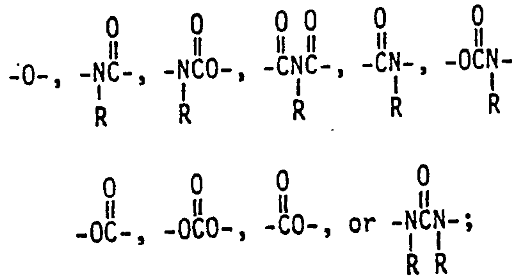

R is H or $C_1$—$C_4$ alkyl or hydroxyalkyl; $R^1$ is substituted $C_2$—$C_{12}$ alkylene, hydroxyalkyle, alkenylene, arylene or alkarylene, or $C_2$—$C_3$ oxyalkylene; each $R^2$ is $C_1$—$C_{12}$ alkylene, hydroxyalkylene, alkenylene, arylene or alkarylene; each $R^3$ is $C_1$—$C_4$ alkyl or hydroxyalkyl, the moiety $-(R^5)_k-[(C_3H_6O)_m(CH_2CH_2O)_n]-X$, or together form the moiety $-(CH_2)_r-A^2-(CH_2)_s-$, wherein $A^2$ is —O— or $-CH_2-$; each $R^4$ is $C_1$—$C_4$ alkyl or hydroxyalkyl, or two $R^4$ together form the moiety $-(CH_2)_r-A^2-(CH_2)_s-$; X is H,

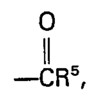,

$-R^5$ or mixture thereof, wherein $R^5$ is $C_1$—$C_4$ alkyl or hydroxyalkyl; j is 1 or 0; k is 1 or 0; m and n are numbers such that the moiety $-(CH_2CH_2O)_n-$ comprises at least 85% by weight of the moiety $-[(C_3H_6O)_m(CH_2CH_2O)_n]-$; m is from 0 to 5; n is at least 3; r is 1 or 2, s is 1 or 2 and r + s is 3 or 4; the number of u, v and w are such that there are at least 2 $N^+$ centers and at least 2 X groups.

23. The compound of claim 22 characterized in that $A^1$ is

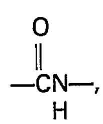, 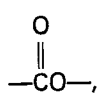, or —O—; $R^1$ is 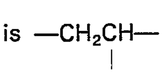 or 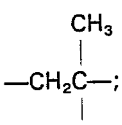;

each $R^4$ is methyl;
X is H or methyl; k is 0.

24. The compound of any of Claims 20—23 characterized in that v and w are O and u is from 3 to 40.

25. The compound of Claim 12 characterized in that said polymer comprises units selected from those having formulas VII and VIII.

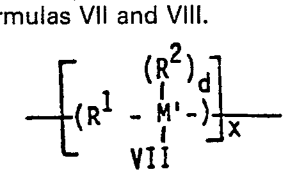
VII

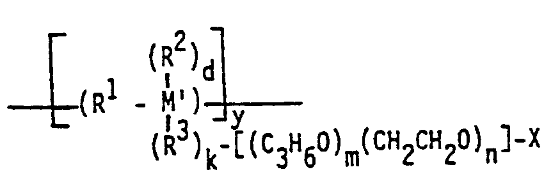
VIII

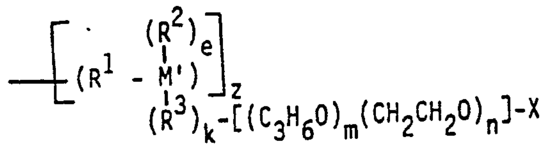
IX

wherein $R^1$ is $C_2$—$C_{12}$ alkylene, hydroxyalkylene, alkenylene, cycloalkylene, arylene or alkarylene, or a $C_2$—$C_3$ oxyalkylene moiety having from 2 to 20 oxyalkylene units provided that no O—N bonds are formed; $R^2$ is $C_1$—$C_4$ alkyl or hydroxyalkyl, or the moiety $-(R^3)_k-[(C_3H_6O)_m(CH_2CH_2O)_n]-X$; $R^3$ is $C_1$—$C_{12}$ alkylene, hydroxyalkylene, alkenylene, arylene or alkarylene; M' is an $N^+$ or N center; X is H,

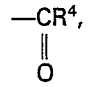

—$R^4$ or mixture thereof, wherein $R^4$ is $C_1$—$C_4$ alkyl or hydroxyalkyl; d is 1 when M' is $N^+$ and is 0 when M' is N; e is 2 when M' is $N^+$ and is 1 when M' is N; k is 1 or 0; m and n are numbers such that the moiety $-(CH_2CH_2O)_n-$ comprises at least 85% by weight of the moiety $-[(C_3H_6O)_m(CH_2CH_2O)]_n-$; m is from 0 to 5; n is at least 3; the number of x, y and z are such that there are at least 2 M' groups, at least 2 $N^+$ centers and at least 2 X groups.

26. The compound of Claim 25 characterized in that $R^1$ is ethylene; each $R^2$ is methyl or the moiety $-[(C_3H_6O)_m(CH_2CH_2O)_n]-X$; X is H; k is 0.

27. The compound of any of Claims 25—26 characterized in that the M' groups are a mixture of from 50 to 100% $N^+$ centers and from 0 to 50% N centers.

28. The compound of any of Claims 25—27 characterized in that x + y + z is from 2 to 40.

29. The compound of Claim 12 characterized in that said polymer comprises units selected from those having formulas X and XI.

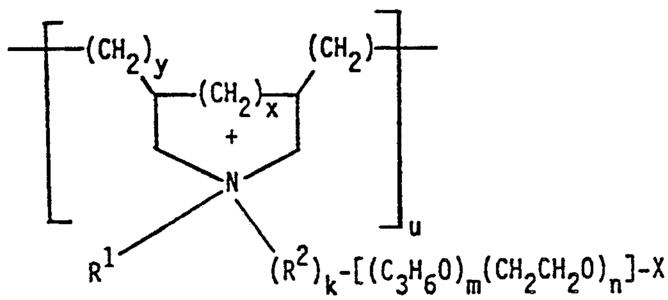

X

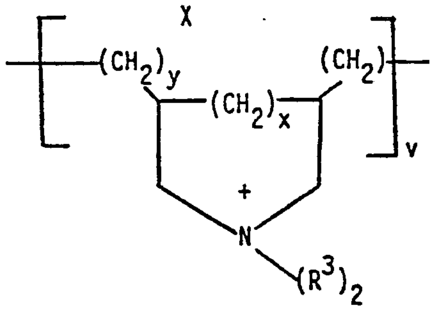

XI

wherein $R^1$ is $C_1$—$C_4$ alkyl or hydroxyalkyl, or the moiety $-(R^2)_k-[(C_3H_6O)_m(CH_2CH_2O)_n]-X$; $R^2$ is $C_1$—$C_{12}$ alkylene, hydroxylalkylene, alkylene, arylene or alkarylene; each $R^3$ is $C_1$—$C_4$ alkyl or hydroxyalkyl, or together form the moiety $-(CH_2)_r-A-(CH_2)_s$, wherein A is —O— or $-CH_2-$; X is H,

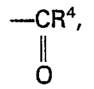

—$R^4$ or mixtures thereof, wherein $R^4$ is $C_1$—$C_4$ alkyl or hydroxyalkyl; k is 1 or 0; m and n are numbers such that the moiety $-(CH_2CH_2O)_n-$ comprises at least 85% by weight of the moiety $[(C_3H_6O)_m(CH_2CH_2O)_n]-$; m is from 0 to 5; n is at least 3; r is 1 or 2, s is 1 or 2, and r + s is 3 or 4; x is 1 or 0; y is 1 when x is 0 and 0 when x is 1; the number of u and v are such that there are at least 2 $N^+$ centers and at least 2 X groups.

30. The compound of Claim 29 characterized in that $R^1$ is methyl; each $R^3$ is methyl; X is H; k is 0.

31. The compound of any of Claims 29—30 characterized in that v is 0 and u is from 3 to 40.

32. The compound of any of Claims 20—31 characterized in that m is 0 and n is at least 12.

33. A detergent composition characterized in that it comprises:

(a) from 1% to 75% by weight of a nonionic, anion ampholytic, zwitterionic, or cationic detergent surfactant or mixtures thereof; and

(b) from 0.05 to 95% by weight of said cationic compound of any of Claims 1—32.

34. The composition of Claim 33 characterized in that it comprises from 0.1 to 10% by weight of said cationic compound.

35. The composition of Claim 34 characterized in that it comprises from 1 to 3% by weight of said cationic compound.

36. The composition of any of claims 33—35 characterized in that said detergent surfactant is selected from the group consisting of nonionic surfactants, anionic surfactants or mixtures thereof.

37. The composition of any of Claims 33—36 characterized in that it further comprises from 0 to 80% by weight of a detergent builder.

**Patentansprüche**

1. Eine wasserlösliche, kationische Verbindung mit Ton-Schmutzentfernungs/Antiwiederabzungs-Eigenschaften ausgewählt aus der Gruppe, bestehend aus:

(1) ethoxylierten, kationischen Monoaminen der Formel:

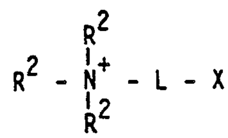

(2) ethoxylierten, kationischen Diaminen der Formel:

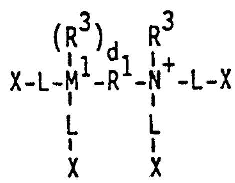

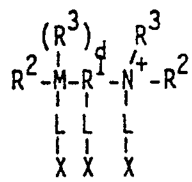

oder

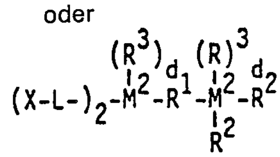

worin $M^1$ eine $N^+$- oder N-Gruppe ist; jeder Rest $M^2$ eine $N^+$- oder N-Gruppe ist, und wenigstens ein Rest $M^2$ eine $N^+$-Gruppe ist;

(3) ethoxylierten, kationischen Polyaminen der Formel:

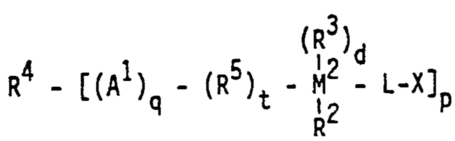

(4) ethoxylierten, kationischen Polymeren, welche ein Polymerskelett, wenigstens 2 M-Gruppen und wenigstens eine L—X-Gruppe enthalten, worin M eine kationische Gruppe ist, die an das Skelett gebunden ist oder ein Bestandteil davon ist, und ein $N^+$ positiv geladenes Zentrum enthält; und L Gruppen M und X verbindet, oder die Gruppe X mit dem Polymerskelett verbindet; und

(5) Gemischen davon;

worin $A^1$

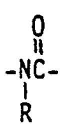, 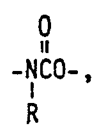, 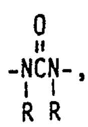, 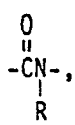, 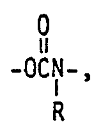, 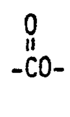, 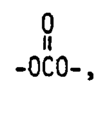, 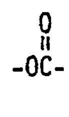, 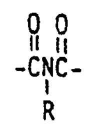 oder -O- ist;

R H oder $C_1$—$C_4$-Alkyl oder -Hydroxyalkyl ist; $R^1$ $C_2$—$C_{12}$-Alkylen, -Hydroxyalkylen, -Alkenylen, Arylen oder Alkarylen, oder ein $C_2$—$C_3$-Oxyalkylenrest mit 2 bis 20 Oxyalkyleneinheiten, vorausgesetzt, daß keine O—N-Bindungen gehildet sind, ist; jeder Rest $R^2$ $C_1$—$C_4$-Alkyl oder Hydroxyalkyl, oder der Rest —L—X ist, oder zwei Reste $R^2$ gemeinsam den Rest $—(CH_2)_r—A^2—(CH_2)_s—$ bilden, worin $A^2$ —O— oder $—CH_2—$ ist, r 1 oder 2 ist, s 1 oder 2 ist, und r + s 3 oder 4 ist; jeder Rest $R^3$ $C_1$—$C_8$-Alkyl oder Hydroxyalkyl, Benzyl, oder der Rest —L—X ist, oder zwei Reste $R^3$ oder je ein Rest $R^2$ und $R^3$ gemeinsam den Rest $—(CH_2)_r—A^2—(CH_2)_s—$ bilden; $R^4$ ein substituierte $C_3$—$C_{12}$-Alkyl-, Hydroxyalkyl-, Alkenyl-, Aryl- oder Alkarylgruppe mit p Substitutionsstellen ist; $R^5$ $C_1$—$C_{12}$-Alkylen, Hydroxyalkylen, Alkenylen, Arylen oder Alkarylen, oder ein $C_2$—$C_3$-Oxyalkylenrest mit 2 bis 20 Oxyalkyleneinheiten, vorausgesetzt, daß keine O—O- oder O—N-Bindungen gebildet sind, ist; X eine nichtionische Gruppe ist, die aus der Gruppe ausgewählt ist, welche aus H, $C_1$—$C_4$-Alkyl- oder Hydroxyalkylester- oder -ethergruppen, und Gemischen davon, besteht; L eine hydrophile Kette ist, welche den Polyoxyalkylenrest $—[(R^6O)_m(CH_2CH_2O)_n]—$ enthält, worin $R^6$ $C_3$—$C_4$-Alkylen oder Hydroxyalkylen ist, und m und n solche Zahlen sind, daß der Rest $—(CH_2CH_2O)_n—$ wenigstens 50 Gew.-% des genannten Polyoxyalkylenrestes ausmacht; d 1 ist, wenn $M^2$ $N^+$ ist, und 0 ist, wenn $M^2$ N ist; n für die genannten kationischen Monoamine wenigstens 12 ist, für die genannten kationischen Diamine wenigstens 6 ist, und für die genannten kationischen Polyamine und kationischen Polymeren wenigstens 3 ist; p 3 bis 8 ist; q 1 oder 0 ist; und t 1 oder 0 ist, vorausgesstzt, daß t 1 ist, wenn q 1 ist.

2. Die Verbindung des Anspruchs 1, dadurch gekennzeichnet, daß die genannte kationische Verbindung ein ethoxyliertes, kationisches Monoamin ist.

3. Die Verbindung des Anspruchs 2, dadurch gekennzeichnet, daß ein Rest $R^2$ Methyl ist, und zwei Reste $R^2$ für den Rest L—X stehen.

4. Die Verbindung des Anspruchs 3, dadurch gekennzeichnet, daß m 0 ist, und n wenigstens 15 ist.

5. Die Verbindung des Anspruchs 1, dadurch gekennzeichnet, daß die genannte kationische Verbindung ein ethoxyliertes, kationisches Diamin ist.

6. Die Verbindung des Anspruchs 5, dadurch gekennzeichnet, daß $R^1$ $C_2$—$C_6$-Alkylen ist.

7. Die Verbindung des Anspruchs 6, dadurch gekennzeichnet, daß $R^1$ Hexamethylen ist.

8. Die Verbindung des Anspruchs 1, dadurch gekennzeichnet, daß die genannte kationische Verbindung ein ethoxyliertes, kationisches Polyamin ist.

9. Die Verbindung des Anspruchs 8, dadurch gekennzeichnet, daß $R^4$ ein substituierte $C_3$—$C_6$-Alkyl-, Hydroxyalkyl- oder Arylgruppe ist; $A^1$

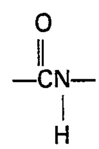 ist;

und p 3 bis 6 ist.

10. Die Verbindung eines der Ansprüche 5 bis 9, dadurch gekennzeichnet, daß jeder Rest $R^2$ Methyl oder der Rest —L—X ist, und jeder Rest $R^3$ Methyl ist.

11. Die Verbindung eines der Ansprüche 5 bis 10, dadurch gekennzeichnet, daß $M^1$ und jeder Rest $M^2$ eine $N^+$-Gruppe bedeuten.

12. Die Verbindung des Anspruchs 1, dadurch gekennzeichnet, daß die genannte kationische Verbindung ein ethoxyliertes, kationisches Polymer ist.

13. Die Verbindung des Anspruchs 12, dadurch gekennzeichnet, daß das genannte Skelett aus der Gruppe ausgewählt ist, die aus den Polyurethanen, den Polyesteren, den Polyethern, den Polyamiden, den Polyimiden, den Polyacrylaten, den Polyacrylamiden, den Polyvinylethern, den Polyalkylenen, den Polyalkylarylenen, den Polyalkyleniminen, den Polyvinylaminen, den Polyallylaminen, den Polydiallylaminen, den Polyvinylpyridinen, den Polyaminotriazolen, Polyvinylalkohol, den Aminopolyureylenen, und Gemischen davon, besteht.

14. Die Verbindung eines der Ansprüche 12—13, dadurch gekennzeichnet, daß das Verhältnis von M-Gruppen zu X-Gruppen 2:1 bis 1:10 geträgt.

15. Die Verbindung eines der Ansprüche 12—14, dadurch gekennzeichnet, daß Einheiten des Gruppen M und L—X enthaltenden Polymers 50 bis 100% des Polymers ausmachen.

16. Die Verbindung eines der Ansprüche 12—15, dadurch gekennzeichnet, daß die Zahl der M- und L—X-Gruppen jeweils 3 bis 40 beträgt.

17. Die Verbindung eines der Ansprüche 5—16, dadurch gekennzeichnet, daß m und n solche Zahlen sind, daß der Rest $—(CH_2CH_2O)_n—$ wenigstens 85 Gew.-% des genannten Polyoxyalkylenrestes ausmacht.

18. Die Verbindung eines der Ansprüche 5—17, dadurch gekennzeichnet, daß m 0 ist, und n wenigstens 12 ist.

19. Die Verbindung eines der Ansprüche 5—18, dadurch gekennzeichnet, daß X H oder Methylether bedeutet.

20. Die Verbindung des Anspruchs 12, dadurch gekennzeichnet, daß das genannte Polymer Einheiten enthält, welche aus jenen der Formeln I, II und III:

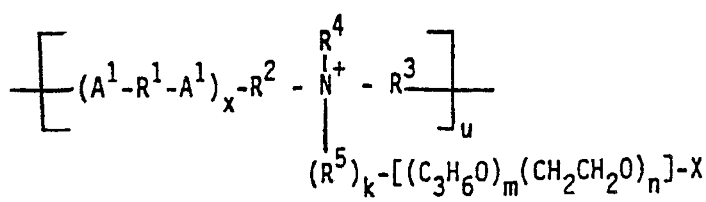

I

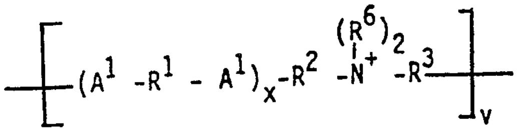

II

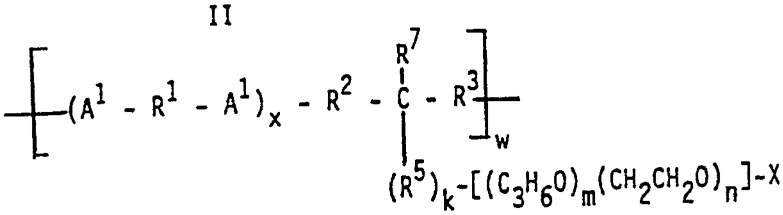

III

ausgewählt sind, worin $A^1$

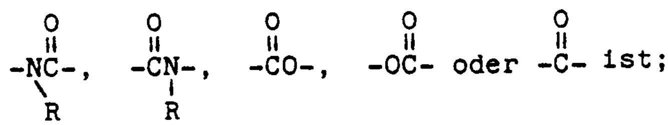

oder ist;

x 0 oder 1 ist; R H oder $C_1$—$C_4$-Alkyl oder Hydroxyalkyl ist; $R^1$ $C_2$—$C_{12}$-Alkylen-, Hydroxyalkylen, Alkenylen, Cycloalkylen, Arylen oder Alkarylen, oder ein $C_2$—$C_3$-Oxyalkylenrest mit 2 bis 20 Oxyalkyleneinheiten, vorausgesetzt, daß keine O—O- oder O—N-Bindungen mit $A^1$ gebildet sind, ist; falls x 1 ist, $R^2$ —$R^5$— ist, ausgenommen, wenn $A^1$

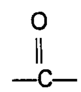

ist, oder —$(OR^8)_y$— oder —$OR^5$— ist, vorausgesetzt, daß kein O—O- oder N—O-Bindungen mit $A^1$ gebildet sind, und $R^3$ —$R^5$— ist, ausgenommen, wenn $A^1$

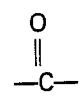

ist, oder —$(R^8O)_y$— oder —$R^5O$— ist, vorausgesetzt, daß keine O—O- oder O—N-Bindungen mit $A^1$ gebildet sind; wenn x O ist, $R^2$

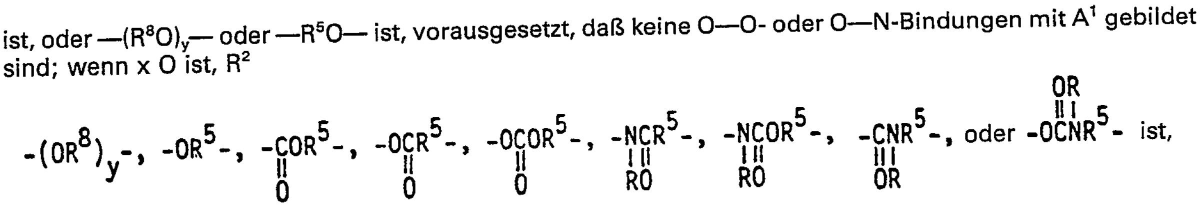

oder ist,

und $R^3$ —$R^5$— ist; $R^4$ $C_1$—$C_4$-Alkyl oder Hydroxyalkyl, oder der Rest —$(R^5)_k$—$[(C_3H_6O)_m(CH_2CH_2O)_n]$—X ist; $R^5$ $C_1$—$C_{12}$-Alkylen, Hydroxyalkylen, Alkenylen, Arylen oder Alkarylen ist; jeder Rest $R^6$ $C_1$—$C_4$-Alkyl oder Hydroxyalkyl, oder der Rest —$(CH_2)_r$—$A^2$—$(CH_2)_s$— ist, worin $A^2$ —O— oder —$CH_2$— ist; $R^7$ H oder $R^4$ ist; $R^8$ $C_2$—$C_3$-Alkylen oder Hydroxyalkylen ist; X H,

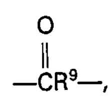

—$R^9$ oder ein Gemisch davon ist, worin $R^9$ $C_1$—$C_4$-Alkyl oder Hydroxyalkyl ist; k 0 oder 1 ist; m und n solche Zahlen sind, daß der Rest —$(CH_2CH_2O)_n$— wenigstens 85 Gew.-% des Restes —$[(C_3H_6O)_m(CH_2CH_2O)_n]$— ausmacht; m 0 bis 5 ist; n wenigstens 3 ist; r 1 oder 2 ist, s 1 oder 2 ist, und r + s 3 oder 4 ist; y 2 bis 20 ist; und die Zahlen von u, v und w derart sind, daß wenigstens 2 $N^+$-Zentren und wenigstens 2 X-Gruppen vorliegen.

21. Die Verbindung des Anspruchs 20, dadurch gekennzeichnet, daß $A^1$

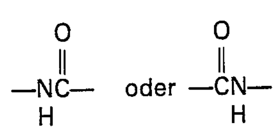

oder

ist; $R^1$ $C_2$—$C_6$-Alkylen ist, $R^2$ —$OR^5$— oder —$(OR^8)_y$— ist; $R^3$ —$R^5O$— oder —$(R^8O)_y$— ist; $R^4$ und $R^6$ jeweils Methyl sind; $R^5$ $C_2$—$C_3$-Alkylen ist; $R^7$ H oder Methyl ist; $R^8$ Ethylen ist; x H oder Methyl ist; k 0 ist; und y 2 bis 12 ist.

22. Die Verbindung des Anspruchs 12, dadurch gekennzeichnet, daß das genannte Polymer Einheiten enthält, welche aus jenen der Formeln IV, V und VI:

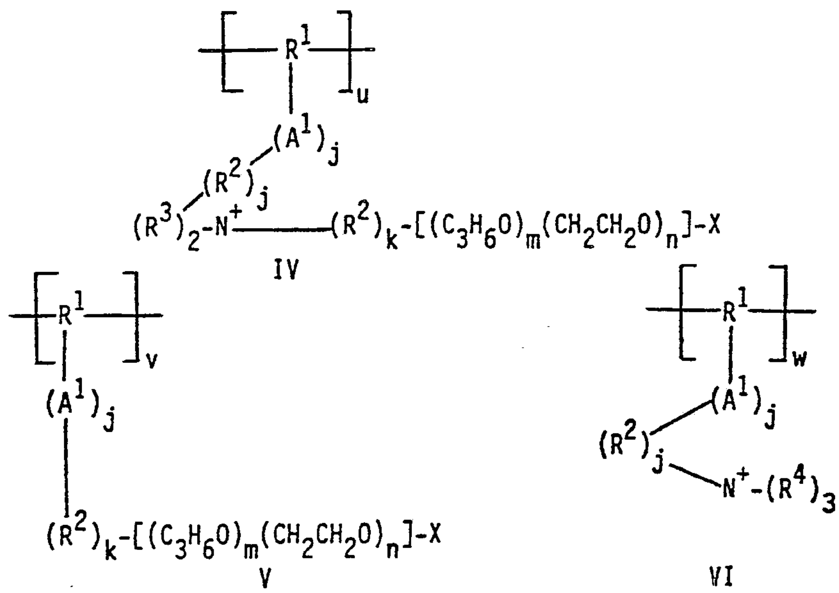

IV

V

VI

ausgewählt sind, worin $A^1$

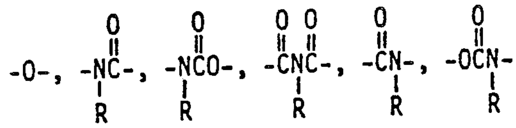

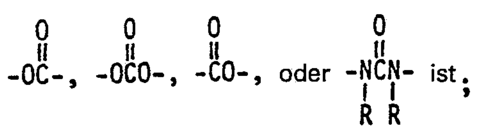

oder ist;

R H oder $C_1$—$C_4$-Alkyl oder -Hydroxyalkyl ist; $R^1$ substituiertes $C_2$—$C_{12}$-Alkylen, -Hydroxyalkylen, Alkenylen, Arylen oder Alkarylen, oder $C_2$—$C_3$-Oxyalkylen ist; jeder Rest $R^2$ $C_1$—$C_{12}$-Alkylen, Hydroxyalkylen, Alkenylen, Arylen oder Alkarylen ist; jeder Rest $R^3$ $C_1$—$C_4$-Alkyl oder Hydroxyalkyl, oder der Rest —$(R^2)_k$—$[(R_3H_6O)_m(CH_2CH_2O)_n]$—X ist, oder zwei Reste $R^3$ gemeinsam den Rest —$(CH_2)_r$—$A^2$—$(CH_2)_s$— bilden, worin $A^2$ —O— oder —$CH_2$— ist; jeder Rest $R^4$ $C_1$—$C_4$-Alkyl oder -Hydroxyalkyl ist, oder zwei Reste $R^4$ gemeinsam den Rest —$(CH_2)_r$—$A^2$—$(CH_2)_s$— bilden;

X H, 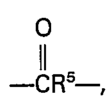

—$R^5$ oder ein Gemisch davon darstellt, worin $R^5$ $C_1$—$C_4$-Alkyl oder Hydroxyalkyl ist; j 1 oder 0 ist; k 1 oder 0 ist; m und n solche Zahlen sind, daß der Rest —$(CH_2CH_2O)_n$— wenigstens 85 Gew.-% des Restes —$[(C_3H_6O)_m(CH_2CH_2O)_n]$— ausmacht; m 0 bis 5 ist; n wenigstens 3 ist; r 1 oder 2 ist; s 1 oder 2 ist, und r + s 3 oder 4 ist; und die Zahlen von u, v und w derart sind, daß wenigstens 2 $N^+$-Zentren und wenigstens 2 X-Gruppen vorliegen.

23. Die Verbindung des Anspruchs 22, dadurch gekennzeichnet, daß $A^1$

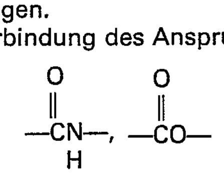 oder —O— ist; $R^1$ 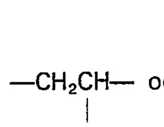 oder 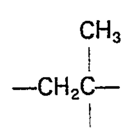 ist;

jeder Rest $R^4$ Methyl ist;

X H oder Methyl ist; und k 0 ist.

24. Die Verbindung eines der Ansprüche 20—23, dadurch gekennzeichnet, daß v und w 0 sind, und u 3 bis 40 ist.

25. Die Verbindung des Anspruchs 12, dadurch gekennzeichnet, daß das genannte Polymer Einheiten enthält, die aus jenen der Formeln VII, VIII und IX:

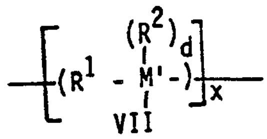

VII

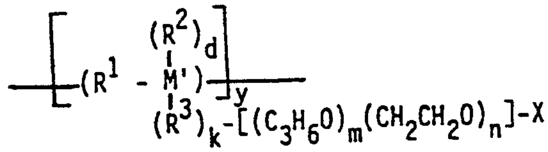

VIII

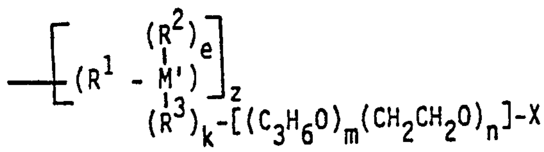

IX

ausgewählt sind, worin $R^1$ $C_2$—$C_{12}$-Alkylen, Hydroxyalkylen, -Alkenylen, Cycloalkylen, Arylen oder Alkarylen, oder ein $C_2$—$C_3$-Oxyalkylenrest mit 2 bis 20 Oxyalkyleneinheiten, vorausgesetzt, daß keine O—N-Bindungen gebildet sind, ist; $R^2$ $C_1$—$C_4$-Alkyl oder Hydroxyalkyl, oder der Rest —$(R^3)_k$—$[(R_3H_6O)_m(CH_2CH_2O)_n]$—X ist; $R^3$ $C_1$—$C_{12}$-Alkylen, Hydroxyalkylen, Alkenylen, Arylen oder Alkarylen ist; M' ein $N^+$- oder N-Zentrum ist; X H,

$$-\underset{\underset{O}{\|}}{C}R^4-,$$

—$R^4$, oder Gemische davon, ist, worin $R^4$ $C_1$—$C_4$-Alkyl oder Hydroxyalkyl ist; d 1 ist, wenn M' für $N^+$ steht, und 0 ist, wenn M' für N steht; e 2 ist, wenn M' für $N^+$ steht, und 1 ist, wenn M' für N steht; k 1 oder 0 ist; m und n solche Zahlen sind, daß der Rest —$(CH_2CH_2O)_n$— wenigstens 85 Gew.-% des Restes —$[(C_3H_6O)_m(CH_2CH_2O)_n]$— ausmacht; m 0 bis 5 ist; n wenigstens 3 ist; und die Zahlen von x, y und z derart sind, daß wenigstens 2 M'-Gruppen, wenigstens 2 $N^+$-Zentren und wenigstens 2 X-Gruppen vorliegen.

26. Die Verbindung des Anspruchs 25, dadurch gekennzeichnet, daß $R^1$ Ethylen ist; jeder Rest $R^2$ Methyl oder der Rest —$[(C_3H_6O)_m(CH_2CH_2O)_n]$—X ist; und k 0 ist.

27. Die Verbindung eines der Ansprüche 25—26, dadurch gekennzeichnet, daß die M'-Gruppen ein Gemisch aus 50 bis 100% $N^+$-Zentren und 0 bis 50% N-Zentren sind.

28. Die Verbindung eines der Ansprüche 25—27, dadurch gekennzeichnet, daß x + y + z 2 bis 40 beträgt.

29. Die Verbindung des Anspruchs 12, dadurch gekennzeichnet, daß ds genannte Polymer Einheiten enthält, die aus jenen der Formeln X und XI:

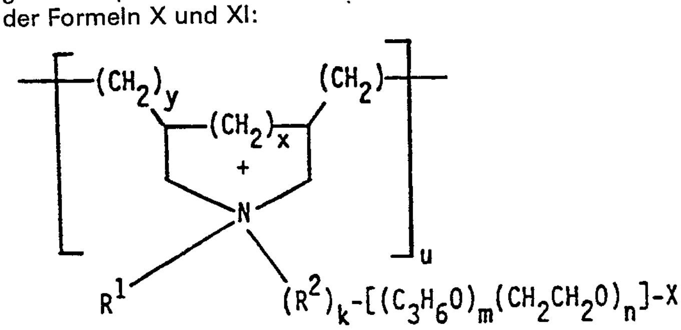

X

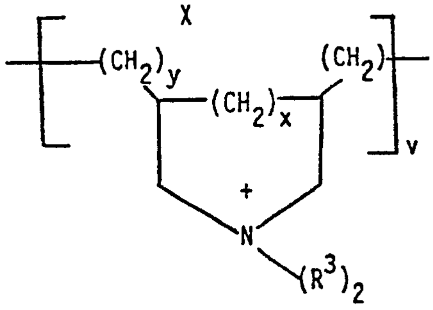

XI

ausgewählt sind, worin $R^1$ $C_1$—$C_4$-Alkyl oder Hydroxyalkyl, oder der Rest —$(R^2)_k$—$[(C_3H_6O)_m(CH_2CH_2O)_n]$—X ist; $R^2$ $C_1$—$C_{12}$— Alkylen, hydroxyalkylen, Alkylen, Arylen oder alkarylen ist; jeder Rest $R^3$ $C_1$—$C_4$-Alkyl oder Hydroxyalkyl ist, oder zwei Reste $R^3$ gemeinsam den Rest —$(CH_2)_r$—A—$(CH_2)_s$ bilden, worin A —O— oder —$CH_2$— ist; X H,

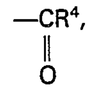

—$R^4$, oder Gemische davon, ist, wobei $R^4$ $C_1$—$C_4$-Alkyl oder Hydroxyalkyl ist; k 1 oder 0 ist; m und n solche Zahlen sind, daß der Rest —$(CH_2CH_2O)_n$— wenigstens 85 Gew.-% des Restes $[(C_3H_6O)_m(CH_2CH_2O)_n]$— ausmacht; m 0 bis 5 ist; n wenigstens 3 ist; r 1 oder 2 ist; s 1 oder 2 ist, und r + s 3 oder 4 ist; x 1 oder 0 ist; y 1 ist, falls x 0 ist, und 0 ist, falls x 1 ist; und die Zahlen von u und v solche sind, daß wenigstens e $N^+$ -Zentren und wenigstens 2 X-Gruppen vorliegen.

30. Die Verbindung des Anspruchs 29, dadurch gekennzeichnet, daß $R^1$ Methyl ist; keder Rest $R^3$ Methyl ist; X H ist; und k 0 ist.

31. Die Verbindung eines der Ansprüche 29—30, dadurch gekennzeichnet, daß v 0 ist, und u 3 bis 40 ist.

32. Die Verbindung eines der Ansprüche 20—31, dadurch gekennzeichnet, daß m 0 ist, und n wenigstens 12 ist.

33. Eine Detergenszusammensetzung, dadurch gekennzeichnet, daß sie enthält:

(a) 1 Gew.-% bis 75 Gew.-% Gew.-% eines nichtionischen, eines ampholytischen, zwitterionischen oder kationischen Detergens-grenzflächenaktiven Mittels, oder von Gemischen davon, und

(b) 0,05 Gew.-% bis 95 Gew.-% der genannten kationischen Verbindung eines der Ansprüche 1—32.

34. Die Zusammensetzung des Anspruchs 33, dadurch gekennzeichnet, daß sie 0,1 Gew.-% bis 10 Gew.-% der genannten kationischen Verbindung enthält.

35. Die Zusammensetzung des Anspruchs 34, dadurch gekennzeichnet, daß die 1 Gew.-% bis 3 Gew.-% der genannten kationischen Verbindung enthält.

36. Die Zusammensetzung eines der Ansprüche 33—35, dadurch gekennzeichnet, daß das genannte Detergens-grenzflächenaktive Mittel aus der Gruppe ausgewählt ist, die aus nichtionischen grenzflächenaktiven Mitteln, anionischen grenzflächenaktiven Mitteln, oder Mischungen davon, besteht.

37. Die Zusammensetzung eines der Ansprüche 33—36, dadurch gekennzeichnet, daß sie weiterhin 0 bis 80 Gew.-% eines Detergensgerüststoffes enthält.

**Revendications**

1. Composé cationique soluble dans l'eau ayant des propriétés d'élimination des salissures argileuses et d'antiredéposition, choisi dans le groupe constitué par:

(1) les monoamines cationiques éthoxylées de formule:

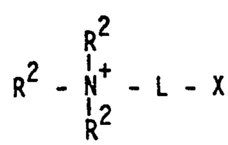

(2) les diamines cationiques éthoxylées de formule:

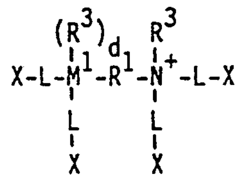

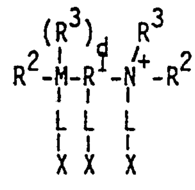

ou

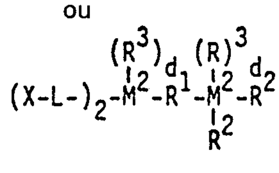

formules dans lesquelles $M^1$ est un groupe $N^+$ ou N; chaque $M^2$ est un groupe $N^+$ ou N et l'un au moins des $M^2$ est un groupe $N^+$;

(3) les polyamines cationiques éthoxylées de formule:

$$R^4-[(A^1)_q-(R^5)_t-\underset{R^2}{\overset{(R^3)_d}{M^2}}-L-X]_p$$

(4) des polymères cationiques éthoxylés qui comprennent un squelette de polymère, au moins deux groupes M et au moins un groupe L—X, où M est un groupe cationique fixé au squelette ou faisant partie du squelette et contenant un centre $N^+$ chargé positivement; et L relie les groupes M et X ou relie le groupe X au squelette de polymère; et

(5); leurs mélanges, où $A^1$ est

$$-\underset{R}{N}\overset{O}{\overset{\|}{C}}-,\ -\underset{R}{N}\overset{O}{\overset{\|}{C}}O-,\ -\underset{R}{N}\overset{O}{\overset{\|}{C}}\underset{R}{N}-,\ -\overset{O}{\overset{\|}{C}}\underset{R}{N}-,\ -O\overset{O}{\overset{\|}{C}}\underset{R}{N}-,\ -\overset{O}{\overset{\|}{C}}O-,\ -O\overset{O}{\overset{\|}{C}}O-,\ -O\overset{O}{\overset{\|}{C}}-,\ -\overset{O}{\overset{\|}{C}}\underset{R}{N}\overset{O}{\overset{\|}{C}}-\ \text{ou}\ O-;$$

R est H ou un groupe alkyle ou hydroxyalkyle en $C_1$—$C_4$; $R^1$ est un groupe alkylène, hydroxyalkylène, alcénylène, arylène ou alkylarylène en $C_2$—$C_{12}$, ou un groupement oxyalkylène en $C_2$—$C_3$ comportant de 2 à 20 motifs oxyalkylène, à condition qu'aucune liaison O—N ne soit formée; chaque $R^2$ est un groupe alkyle ou hydroxyalkyle en $C_1$—$C_4$, le groupement —L—X, ou bien deux $R^2$ forment ensemble le groupement $—(CH_2)_r—A^2—(CH_2)_s—$, dans lequel $A^2$ est —O— ou $—CH_2—$, r est égal à 1 ou 2, s est égal à 1 ou 2 et r + s est égal à 3 ou 4; chaque $R^3$ est un groupe alkyle ou hydroxyalkyle en $C_1$—$C_8$, un groupe benzyle, le groupement —L—X, ou deux $R^3$ ou bien un $R^2$ et $R^3$ forment ensemble le groupement $—(CH_2)_r—A^2—(CH_2)_s—$; $R^4$ est un groupe alkyle, hydroxyalkyle, alcényle, aryle ou alkylaryle substitué en $C_3$—$C_{12}$ comportant p sites de substitution; $R^5$ est un groupe alkylène, hydroxyalkylène, alcénylène, arylène ou alkylarylène en $C_1$—$C_{12}$, ou un groupement oxyalkylène en $C_2$—$C_3$ comportant de 2 à 20 motifs oxyalkylène, à condition qu'aucune liaison O—O ou O—N ne soit formée; X est un groupe non ionique choisi dans le groupe constitué par H, les groupes alkyle en $C_1$—$C_4$ ou ester ou éther hydroxyalkylique, et leurs mélanges; L est une chaîne hydrophile qui contient le groupement polyoxyalkylène $—[(R^6O)_m(CH_2CH_2O)_n]—$, dans lequel $R^6$ est un groupe alkylène ou hydroxyalkylène en $C_3$—$C_4$ et m et n sont des nombres tels que le groupement $—(CH_2CH_2O)_n—$ constitue au moins 50% en poids dudit groupement polyoxyalkylène; d est égal à 1 lorsque $M^2$ est $N^+$ et est nul lorsque $M^2$ est N; n est au moins égal à 12 pour les monoamines cationiques, est au moins égal à 6 pour les diamines cationiques et est au moins égal à 3 pour les polyamines cationiques et les polymères cationiques; p a une valeur de 3 à 8, q est égal à 1 ou 0; t est égal à 1 ou 0, à condition que t soit égal à lorsque q est égal à 1.

2. Composé selon la revendication 1, caractérisé en ce que le composé cationique est une monoamine cationique éthoxylée.

3. Composé selon la revendication 2, caractérisé en ce que l'un des $R^2$ est un méthyle et deux $R^2$ sont le groupement L—X.

4. Composé selon la revendication 3, caractérisé en ce que m est nul et n est au moins égal à 15.

5. Composé selon la revendication 1, caractérisé en ce que le composé cationique est une diamine cationique éthoxylée.

6. Composé selon la revendication 5, caractérisé en ce que $R^1$ est un groupe alkylène en $C_2$—$C_6$.

7. Composé selon la revendication 6, caractérisé en ce que $R^1$ est un hexaméthylène.

8. Composé selon la revendication 1, caractérisé en ce que le composé cationique est une polyamine cationique éthoxylée.

9. Composé selon la revendication 8, caractérisé en ce que $R^4$ est un groupe alkyle substitué en $C_3$—$C_6$, hydroxyalkyle ou aryle; $A^1$ est

$$—\overset{O}{\overset{\|}{C}}\underset{H}{N}—;$$

p a une valeur de 3 à 6.

10. Composé selon l'une quelconque des revendications 5—9, caractérisé en ce que chaque $R^2$ est un groupe méthyle ou le groupement —L—X et chaque $R^3$ est un groupe méthyle.

11. Composé selon l'une quelconque des revendications 5—10, caractérisé en ce que $M^1$ et chaque $M^2$ sont des groupes $M^+$.

12. Composé selon la revendication 1, caractérisé en ce que le composé cationique est un polymère cationique éthoxylé.

13. Composé selon la revendication 12, caractérisé en ce que le squelette est choisi dans le groupe constitué par les polyuréthannes, les polyesters, les polyéthers, les polyamides, les polyimides, les polyacrylates, les polyacrylamides, les poly(éthers vinyliques), les polyalkylènes, les polyalkylarylènes, les

polyalkylène-imines, les polyvinylamines, les polyallylamines, les polydiallylamines, les polyvinylpiridines, les polyaminotriazoles, les poly(alcool vinylique), les aminopolyuréylènes et leurs mélanges.

14. Composé selon l'une quelconque des revendications 12—13, caractérisé en ce que le rapport des groupes M aux groupes X est de 2:1 à 1:10.

15. Composé selon l'une quelconque des revendications 12—14, caractérisé en ce que les motifs du polymère contenant des groupes M et L—X constituent de 50 à 100% du polymère.

16. Composé selon l'une quelconque des revendications 12—15, caractérisé en ce que le nombre de groupes M et L—X est pour chacun de 3 à 40.

17. Composé selon l'une quelconque des revendications 5—16, caractérisé en ce que m et n sont des nombres tels que le groupement $—(CH_2CH_2O)_n—$ constitue au moins 85% en poids du groupement polyoxyalkylène.

18. Composé selon l'une quelconque des revendications 5—17, caractérisé en ce que m est nul et n est au moins égal à 12.

19. Composé selon l'une quelconque des revendications 5—18, caractérisé en ce que X est H ou un éther méthylique.

20. Composé selon la revendication 12, caractérisé en ce que le polymère comprend des motifs choisis parmi ceux de formules I, II et II:

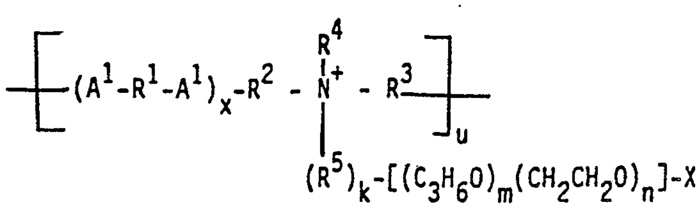

I

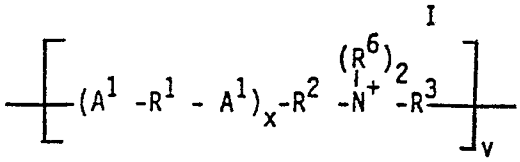

II

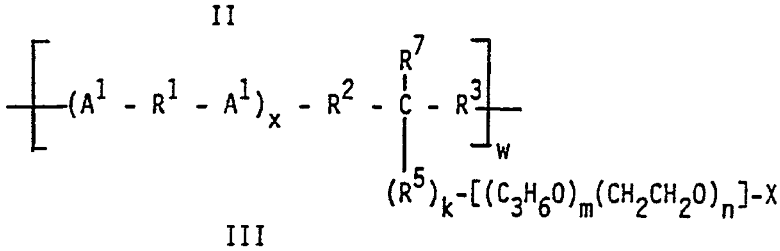

III

dans lesquelles A est

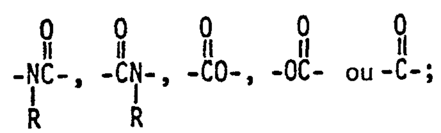

x est nul ou égal à 1; R est H ou un groupe alkyle ou hydroxyalkyle en $C_1—C_4$; $R^1$ est un groupe alkylène, hydroxyalkylène, alcénylène, cycloalkylène, arylène ou alkylarylène en $C_2—C_{12}$, ou un groupement oxyalkylène en $C_2—C_3$ comportant de 2 à 20 motifs oxyalkylène, à condition qu'aucune liaison O—O ou O—N ne soit formée avec $A^1$; lorsque x est égal à 1, $R^2$ est $—R^5—$, sauf lorsque $A^1$ est

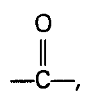

ou est $—(OR^8)_y—$ ou $—OR^5—$, à conditon qu'aucune liaison O—O ou O—N ne ce forme avec $A^1$, et $R^3$ est $—R^5—$, sauf lorsque $A^1$ est

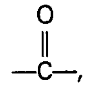

ou est $-(R^8O)_y-$ ou $-R^5O-$, à condition qu'aucune liaison O—O ou O—N ne se forme avec $A^1$; lorsque x est nul, $R^2$ est

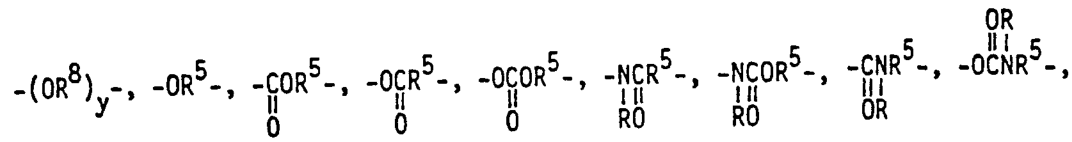

et $R^3$ est $-R^5-$; $R^4$ est un groupe alkyle ou hydroxyalkyle en $C_1$—$C_4$ ou le groupement $-(R^5)_k-[(C_3H_6O)_m(CH_2CH_2O)_n]-X$; $R^5$ est un groupe alkylène, hydroxyalkylène, alcénylène, arylène ou alkylarylène en $C_1$—$C_{12}$; chaque $R^6$ est un groupe alkyle ou hydroxyalkyle en $C_1$—$C_4$ ou le groupement $-(CH_2)_r-A^2-(CH_2)_s-$, dans lequel $A^2$ est —O— ou $-CH_2-$; $R^7$ est H ou $R^4$; $R^8$ est un groupe alkylène ou hydroxyalkylène en $C_2$—$C_3$; X est H,

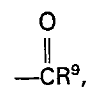

$-R^9$ ou un mélange de ceux-ci, où $R^9$ est un groupe alkyle ou hydroxyalkyle en $C_1$—$C_4$; k est nul ou égal à 1; m et n sont des nombres tels que le groupement $-(CH_2CH_2O)_n-$ constitue au mons 85% en poids du groupement $-[(C_3H_6O)_m(CH_2CH_2O)_n]-$; m a une valeur de 0 à 5; n est au moins égal à 3; r est égal à 1 ou 2, s est égal à 1 ou 2 et r + s est égal à 3 ou 4; y a une valeur de 2 à 20; les nombres de u, de v et de w sont tels qu'il y ait au moins deux centres $N^+$ et au moins deux groupes X.

21. Composé selon la revendication 20, caractérisé en ce que $A^1$ est

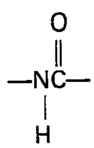 ou 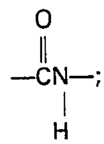

$R^1$ est un groupe alkylène en $C_2$—$C_6$, $R^2$ est $-OR^5-$ ou $-(OR^8)_y-$; $R^3$ est $-R^5O-$ ou $-(R^8O)_y-$; $R^4$ et $R^6$ sont chacun un groupe méthyle; $R^5$ est un groupe alkylène en $C_2$—$C_3$; $R^7$ est H ou un groupe méthyle; $R^8$ est un éthylène; X est H ou un groupe méthyle; k est nul; y a une valeur de 2 à 12.

22. Composé selon la revendication 12, caractérisé en ce que le polymère comprend des motifs choisis parmi ceux de formules IV, V et VI:

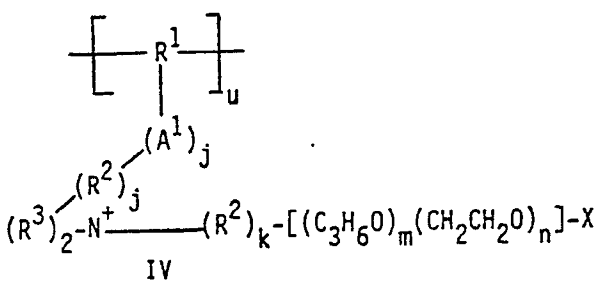

IV

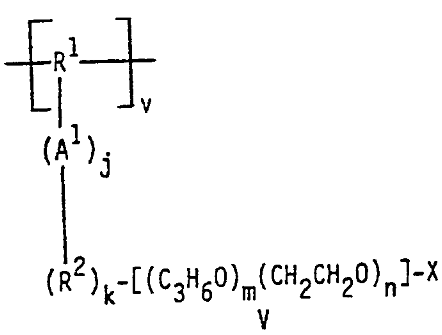

V

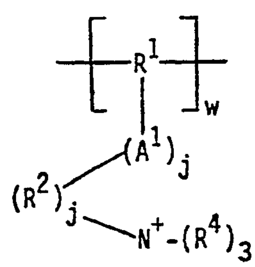

VI

dans lesquelles $A^1$ est

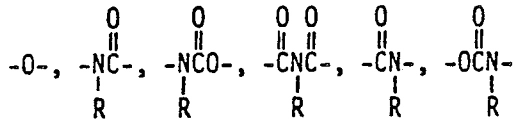

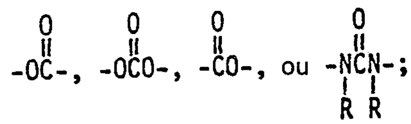

R est H ou un groupe alkyle ou hydroxyalkyle en $C_1$—$C_4$; $R^1$ est un groupe alkylène, hydroxyalkylène, alcénylène, arylène ou alkylarylène substitué en $C_2$—$C_{12}$, ou un groupe oxyalkylène en $C_2$—$C_3$; chaque $R^2$ est un groupe alkylène, hydroxyalkylène, alcénylène, arylène ou alkylarylène en $C_1$—$C_{12}$; chaque $R^3$ est un groupe alkyle ou hydroxyalkyle en $C_1$—$C_4$, le groupement $-(R^2)_k-[(C_3H_6O)_m(CH_2CH_2O)_n]-X$, ou deux $R^3$ forment ensemble le groupement $-(CH_2)_r-A^2-(CH_2)_s-$, dans lequel $A^2$ est —O— ou $-CH_2-$; chaque $R^4$ est un groupe alkyle ou hydroxyalkyle en $C_1$—$C_4$, ou deux $R^4$ forment ensemble le groupement $-(CH_2)_r-A^2-(CH_2)_s-$; X est H,

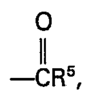

$-R^5$ ou un mélange de ceux-ci où $R^5$ est un groupe alkyle ou hydroxyalkyle en $C_1$—$C_4$; j est égal à 1 ou 0; k est égal à 1 ou 0; m et n sont des nombres tels que le groupement $-(CH_2CH_2O)_n-$ constitue au moins 85% en poids du groupement $-[(C_3H_6O)_m(CH_2CH_2O)_n]-$; m a une valeur de 0 à 5; n est au moins égal à 3; r est égal à 1 ou 2, s est égal à 1 ou 2 et r + s est égal à 3 ou 4; les nombres de u, de v et de w tels qu'il y ait au moins deux centres $N^+$ et au moins deux groupes X.

23. Composé selon la revendication 22, caractérisé en ce que $A^1$ est

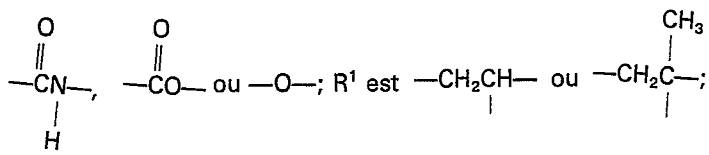

ou —O—; $R^1$ est ou

chaque $R^4$ est un groupe méthyle; X est H ou un groupe méthyle; k est nul.

24. Composé selon l'une quelconque des revendications 20—23, caractérisé en ce que v et w sont nuls et u a une valeur de 3 à 40.

25. Composé selon la revendication 12, caractérisé en ce que le polymère comprend des motifs choisis parmi ceux de formules VII, VIII et IX

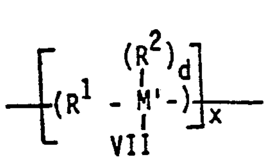

VII

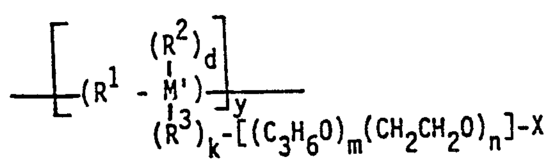

VIII

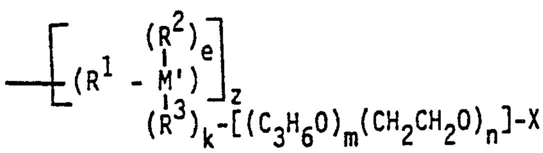

IX

dans lesquelles $R^1$ est un groupe alkylène, hydroxyalkylène, alcénylène, cyclalkylène, arylène ou alkylarylène en $C_2$—$C_{12}$, ou un groupement oxyalkylène en $C_2$—$C_3$ comportant de 2 à 20 motifs oxyalkylène, à condition qu'aucune liaison O—N en soit formée; $R^2$ est un groupe alkyle ou hydroxyalkyle en $C_1$—$C_4$, ou le groupement $-(R^3)_k-[(C_3H_6O)_m(CH_2CH_2O)_n]-X$; $R^3$ est un groupe alkylène, hydroxyalkylène, alcénylène, arylène ou alkylarylène en $C_1$—$C_{12}$; M′ est un centre $N^+$ ou N; X est H, $-CR^4$, $-R^4$ ou un mélange de ceux-ci, où $R^4$ est un groupe alkyle ou hydroxyalkyle en $C_1$—$C_4$; d est égal à 1 lorsque M′ est $N^+$ et est nul lorsque M′ est N; e est égal à 2 lorsque M′ est $N^+$ et est égal à 1 lorsque M′ est N; k est égal à 1 ou 0; m et n sont des

nombres tels que le groupement —$(CH_2CH_2O)_n$— constitue au moins 85% en poids du groupement —$[(C_3H_6O)_m(CH_2CH_2O)]_n$—; m a une valeur de 0 à 5; n est au moins égal à 3; les nombres de x, de y et de z sont tels qu'il y ait au moins deux groupes M', au moins deux centres $N^+$ et au moins deux groupes X.

26. Composé selon la revendication 25, caractérisé en ce que $R^1$ est un éthylène; chaque $R^2$ est un groupe méthyle ou le groupement —$[(C_3H_6O)_m(CH_2CH_2O)_m]$—X; X est H; k est nul.

27. Composé selon l'une quelconque des revendications 25—26, caractérisé en ce que les groupes M' sont un mélange de 50 à 100% de centres $N^+$ et de 0 à 50% de centres N.

28. Composé selon l'une quelconque des revendications 25—27, caractérisé en ce que x + y + z a une valeur de 2 à 40.

29. Composé selon la revendication 12, caractérisé en ce que le polymère comprend des motifs choisi parmi ceux de formules X et XI

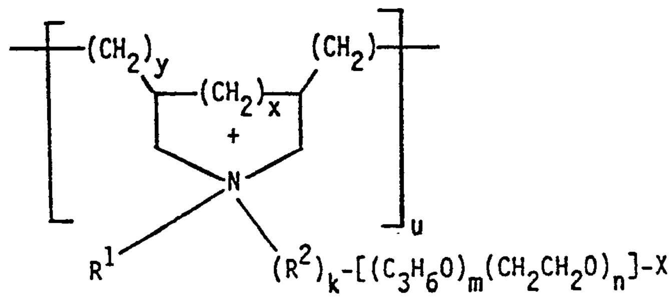

X

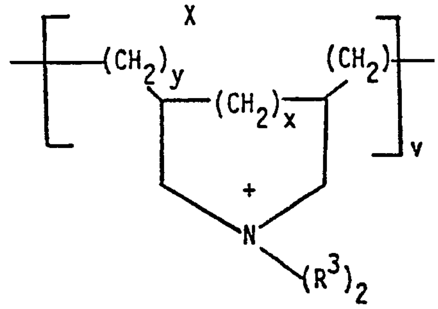

XI

dans lesquelles $R^1$ est un groupe alkyle ou hydroxyalkyle en $C_1$—$C_4$ ou le groupement —$(R^2)_k$—$[(C_3H_6O)_m(CH_2CH_2O)_n]$—X; $R^2$ est un groupe alkylène, hydroxyalkylène, alcénylène, arylène ou alkylarylène en $C_1$—$C_{12}$; chaque $R^3$ est un groupe alkyle ou hydroxyalkyle en $C_1$—$C_4$, ou deux $R^3$ forment ensemble le groupement —$(CH_2)_r$—A—$(CH_2)_s$, dans lequel A est —O— ou —$CH_2$—; X est H,

$$-\underset{\underset{O}{\|}}{C}R^4,$$

—$R^4$ ou leurs mélanges, où $R^4$ est un groupe alkyle ou hydroxyalkyle en $C_1$—$C_4$; k est égal à 1 ou 0; m et n sont des nombres tels que le groupement —$(CH_2CH_2O)_n$— constitue au moins 85% du groupement —$[(C_3H_6O)_m(CH_2CH_2O)_n]$—; m a une valeur de 0 à 5; n est au moins égal à 3; r est égal à 1 ou 2, s est égal à 1 ou 2 et r + s est égal à 3 ou 4; x est égal à 1 ou 0; y est égal à 1 lorsque x est égal à 0 et à 0 lorsque x est égal à 1; les nombres de u et de v sont tels qu'il y ait au moins deux centres $N^+$ et au moins deux groupes X.

30. Composé selon la revendication 29, caractérisé en ce que $R^1$ est un groupe méthyle; chaques $R^3$ est un groupe méthyle; X est H; k est nul.

31. Composé selon les revendications 29—30, caractérisé en ce que v est nul et u a une valeur de 3 à 40.

32. Composé selon l'une quelconque des revendications 20—31, caractérisé en ce que m est nul et n est au moins égal à 12.

33. composition détergente, caractérisé en ce qu'elle comprend:

(a) de 1% à 75% en poids d'un tensioactif détergent non ionique, ampholyte, zwittérionique ou cationique ou de mélanges de ceux-ci; et

(b) de 0,05 à 95% en poids du composé cationique selon l'une quelconque des revendications 1—32.

34. Composé selon la revendication 33, caractérisée en ce qu'elle comprend de 0,1 à 10% en poids du composé cationique.

35. Composé selon la revendication 34, caractérisée en ce qu'elle comprend de 1 à 3% en poids de composé cationique.

36. Composé selon l'une quelconque des revendications 33—35, caractérisé en ce que le tensioactif détergent est choisi dans le groupe constitué par les tensioactifs non ioniques, les tensioactifs anioniques ou leurs mélanges.

37. Composé selon l'une quelconque des revendications 33—36, caractérisé en ce qu'elle comprend en outre de 0 à 80% en poids d'un adjuvant de détergence.